# EUROPÄISCHE PATENTSCHRIFT

(11) **EP 4 342 768 B1**
(45) Veröffentlichungstag und Bekanntmachung des Hinweises auf die Patenterteilung: **05.08.2026**
(21) Anmeldenummer: 23193012.4
(22) Anmeldetag: 23.08.2023
(51) Int. Cl.: B62B 3/02, B62J 6/025, B62J 7/08, B62J 9/20, B62J 11/19, B62J 19/00, B62J 25/04, B62J 27/30, B62J 43/16, B62J 43/20, B62J 45/20, B62J 50/26, B62K 5/00, B62K 5/01, B62K 5/08, B62K 19/30, B62K 21/22, B62L 1/04, B62L 3/04

(54) **ZUSAMMENFALTBARES FAHRZEUG SOWIE SYSTEM AUS EINEM DERARTIGEN FAHRZEUG UND EINER TASCHE**
COLLAPSIBLE VEHICLE AND SYSTEM OF SUCH A VEHICLE AND A BAG
VÉHICULE PLIABLE ET SYSTÈME COMPRENANT UN TEL VÉHICULE ET UNE POCHE

(30) Priorität: 21.09.2022 DE 102022124205
(43) Veröffentlichungstag der Anmeldung: 27.03.2024
(73) Patentinhaber: Katapult Innovation GmbH, 28199 Bremen (DE)
(72) Erfinder: Wetjen, Andre, 28199 Bremen (DE)
(74) Vertreter: Wasiljeff, Johannes M.B.

(56) Entgegenhaltungen:
- WO-A1-2017/189861
- CN-A- 108 639 115
- DE-U1- 202020 104 896

## Beschreibung

Die Erfindung betrifft ein zusammenfaltbares Fahrzeug gemäß dem Oberbegriff von Anspruch 1 sowie ein System aus einem derartigen Fahrzeug und einer Tasche gemäß Anspruch 15.

Die Erfindung befasst sich mit zusammenfaltbaren Fahrzeugen. Ein solches Fahrzeug kann einen zusammengefalteten Zustand einnehmen, in dem es nicht nutzbar, jedoch in einer Tasche verstaubar ist. Zudem kann es einen entfalteten Zustand einnehmen, in dem das Fahrzeug wahlweise als Roller zum Transport einer Person oder als Handwagen zum Transport von Waren nutzbar ist.

Ein herkömmliches zusammenfaltbares Fahrzeug ist aus CN 107878651 A bekannt. Dieses Fahrzeug weist sechs Räder an drei Achsen auf. Die beiden Räder der mittleren Achse sind elektrisch antreibbar. Sie sind an einem zentralen Fahrzeugelement mit einer Lenkstange angeordnet. Zu beiden Seiten des zentralen Fahrzeugelements erstreckt sich jeweils eine ausziehbare Bodenplatte, an der jeweils zwei weitere Räder angeordnet sind. Die beiden ausziehbaren Bodenplatten lassen sich jeweils separat hochklappen, so dass das Fahrzeug auf ein kompakteres Maß zusammengeklappt werden kann. Dazu ist jede der beiden ausziehbaren Bodenplatten gelenkig mit dem zentralen Fahrzeugelement verbunden. Nachteilig an diesem Fahrzeug ist jedoch, dass insbesondere beim Bremsen die Gefahr besteht, dass das vordere Gelenk zwischen der vorderen Bodenplatte und dem zentralen Fahrzeugelement einknickt und der Fahrer vorne über verunglückt. In ähnlicher Weise kann beim Beschleunigen, vor allem bei einer Beschleunigung während einer Berganfahrt, das hintere Gelenk zwischen der hinteren Bodenplatte und dem zentralen Fahrzeugelement einknicken, wodurch es ebenfalls zu einem Unfall kommen kann.

Ein weiteres zusammenfaltbares Fahrzeug ist aus CN 202029972 U bekannt. Bei diesem Fahrzeug ist die Bodenplatte gelenkig mit einem Vorderteil mit Lenkstange verbunden, wobei die Bodenplatte mittels des Gelenks in Richtung der Lenkstange hochgeklappt werden kann. Die Bodenplatte ist mehrteilig aufgebaut und kann durch Auseinanderziehen verlängert werden. Nachteilig an diesem zusammenfaltbaren Fahrzeug ist jedoch, dass auch im zusammengefalteten Zustand ein derart großes Objekt verbleibt, das aufgrund seiner verbleibenden Größe nicht in einer Umhängetasche getragen werden kann.

Weitere zusammenfaltbare Fahrzeuge in Form reiner Handwagen sind aus WO 2017/189861 A1 und CN 108 639 115 A bekannt. Sie eignen sich jedoch mangels geeigneter Lenkeinrichtungen nicht als Roller zur Fortbewegung von Personen.

Das Dokument WO2017189861A1 offenbart ein zusammenfaltbares Fahrzeug, das einen zusammengefalteten Zustand einnehmen kann, in dem das Fahrzeug nicht nutzbar und in einer Tasche verstaubar ist, und einen entfalteten Zustand einnehmen kann, in dem das Fahrzeug als Handwagen zum Transport von Waren nutzbar ist, wobei das Fahrzeug eine Bodenplatte, eine Lenkstange und vier Räder aufweist, wobei im entfalteten Zustand die Bodenplatte eine durchgängige ebene Fläche bildet, wobei die Bodenplatte in mindestens zwei Plattenelemente geteilt ist, die durch zwei quer zur Fahrtrichtung angeordnete Scharniere verbunden sind, mittels denen die Bodenplatte in Richtung der Unterseite des Fahrzeugs zusammenfaltbar ist, wobei alle Räder an den äußeren Plattenelementen, nämlich zwei Räder an einem vorderen Plattenelement und zwei Räder an einem hinteren Plattenelement, angeordnet sind, wobei die Lenkstange eine Teleskopstange ist, die im zusammengefalteten Zustand ohne Demontage der Teleskopstange zwischen den Plattenelementen verstaubar ist, wobei die Lenkstange nach vorne in verschiedene Kipppositionen gekippt und nach hinten aufgerichtet werden kann, wobei die Lenkstange mit einer Lenkachse verbunden ist.

Weitere faltbare Fahrzeuge sind aus US 2006 / 0 220 334 A1, US 2019 / 0 127 010 A1 und CN 2 01 492 901 U bekannt.

Aus DE 20 2020 104 896 U1 ist eine Transportvorrichtung bekannt, die in einer ersten Gruppierung als Tretroller und in einer zweiten Gruppierung als Handkarren ausgebildet ist.

Der Erfindung liegt die Aufgabe zu Grunde, zusammenfaltbare Fahrzeuge weiterzuentwickeln, die im zusammengefalteten Zustand bequem in einer Umhängetasche getragen werden können und im entfalteten Zustand sowohl zum Transport einer Person als auch als Handwagen zum Transport von Waren verwendet werden kann.

Die Erfindung löst diese Aufgabe mit den Merkmalen eines zusammenfaltbaren Fahrzeugs gemäß Anspruch 1 sowie einem System aus einem derartigen Fahrzeug und einer Tasche gemäß Anspruch 15.

Das erfindungsgemäße zusammenfaltbare Fahrzeug kann sowohl einen zusammengefalteten Zustand einnehmen, in dem das Fahrzeug nicht nutzbar, jedoch in einer Tasche, insbesondere Umhängetasche, verstaubar ist, als auch einen entfalteten Zustand, in dem das Fahrzeug wahlweise als Roller zum Transport einer Person oder als Handwagen zum Transport von Waren nutzbar ist.

Das erfindungsgemäße zusammenfaltbare Fahrzeug weist eine Bodenplatte, eine Lenkstange und vier Räder auf. Im entfalteten Zustand bildet die Bodenplatte eine durchgängige ebene Fläche. Diese Fläche eignet sich daher insbesondere zur Aufnahme von Kisten oder Kästen, wie Getränkekästen, oder anderen Gegenständen mit einem flachen Boden. Die Bodenplatte weist insofern keine solchen Erhebungen auf, die sich bspw. in den Boden einer Kiste oder eines Kastens eindrücken würden.

Die Bodenplatte ist in mindestens drei Plattenelemente geteilt, die durch mindestens zwei quer zur Fahrtrichtung angeordnete Scharniere verbunden sind, mittels denen die Bodenplatte in Richtung der Unterseite des Fahrzeugs zusammengefaltet werden kann. Alle Räder des Fahrzeugs sind an den äußeren Plattenelementen angeordnet. Dazu sind zwei Räder an einem vorderen Plattenelement und zwei weitere Räder an einem hinteren Plattenelement angeordnet. Hierdurch wird eine großflächige Bodenplatte mit minimaler Kippgefahr ermöglicht, die jedoch auf ein kleines Maß zusammengefaltet werden kann.

Die Lenkstange ist als Teleskopstange ausgebildet und weist bevorzugt mindestens drei auseinanderziehbare und zusammenschiebbare rohrartige Einzelelemente auf, wobei die Teleskopstange im zusammengefalteten Zustand des Fahrzeugs ohne Demontage der Teleskopstange zwischen den Plattenelementen verstaubar ist. Hierdurch verschwindet die Teleskopstange im Inneren des Fahrzeugs zusammengefalteten Zustand und ragt nicht störend als Hindernis aus dem sich ergebenden kompakten Körper heraus.

Die Lenkstange kann in verschiedene Kipppositionen nach vorne gekippt und nach hinten aufgerichtet werden.

Die Lenkstange ist dabei ferner mit einer Lenkachse verbunden, mittels der durch seitliches Schwenken der Lenkstange um die Lenkachse die Räder am vorderen Plattenelement in jeder Kippposition der Lenkstange lenkbar sind. In einer nach vorne gekippten Kippposition der Lenkstange lässt sich das Fahrzeug ziehen.

Dank der Mehrzahl an Plattenelementen und Scharnieren und der zwischen den Plattenelementen verstaubaren Teleskopstange erreicht das Fahrzeug in zusammengefaltetem Zustand einen wesentlich höheren Grad an Kompaktheit als herkömmliche zusammenfaltbare Fahrzeuge und zwar bei gleichzeitig hoher Stabilität und Flexibilität des Fahrzeugs. Das erfindungsgemäße Fahrzeug lässt sich dank dieser Konstruktion auf ein kompaktes Packmaß zusammenfalten, so dass es in einer Tasche, insbesondere Umhängetasche, mitgeführt werden kann.

Vorteilhafterweise ist das Fahrzeug im 3-D-Druckverfahren aus Kunststoff hergestellt. Dies ermöglicht ein geringes Gewicht bei gleichzeitig hoher Stabilität.

Im entfalteten Zustand kann das Fahrzeug wahlweise als Roller zum Transport einer Person oder als Handwagen zum Transport von Waren verwendet werden. Das erfindungsgemäße Fahrzeug eignet sich daher in idealer Weise zum Einkaufen. Insbesondere eignet sich das erfindungsgemäße Fahrzeug auch für den Einkauf von Getränkekästen. Zunächst kann eine Person auf dem Fahrzeug stehend zu ihrem Ziel, bspw. einem Lebensmittelgeschäft, fahren bzw. rollen. Am Ziel angekommen werden die ausgewählten Waren, bspw. Getränkekästen oder andere Einkäufe, auf der Bodenplatte und ggf. auf einem oder mehreren bereits aufgeladenen Getränkekästen aufgeladen. Anschließend wird das Fahrzeug mittels der Lenkstange weggezogen, bspw. zurück zum Ursprungsort, bspw. nach Hause.

Sofern das Fahrzeug in öffentlichen Verkehrsmitteln mitgenommen werden kann, in denen bspw. der Transport von Fahrrädern und dergleichen anderer Fahrzeuge nicht erlaubt ist, kann das zusammenfaltbare Fahrzeug in einer Tasche, insbesondere Umhängetasche, verstaut werden, so dass derartige Verbote zur Mitnahme von Fahrzeugen nicht zum Tragen kommen. Das erfindungsgemäße Fahrzeug kann daher in vielen Situationen einen Ersatz für einen PKW darstellen. Das erfindungsgemäße Fahrzeug findet daher vorteilhaft Verwendung in einer PKW-armen oder PKW-freien Umgebung, wie sie heute zunehmend mehr in Großstädten anzutreffen ist.

Ein besonderer Vorteil der Erfindung besteht in der Ausbildung der Scharniere, die derart gestaltet sind, dass sich mittels dieser Scharniere die Bodenplatte in Richtung der Unterseite des Fahrzeugs zusammenfalten lässt. Diese Maßnahme führt zu einer besonderen Stabilität der Bodenplatte, insbesondere bei Belastung der Bodenplatte durch eine Person und/oder Waren. Insbesondere bei einer Belastung der Bodenplatte von oben, werden die Plattenelemente in die Horizontale gedrückt, so dass ein Zusammenklappen der Plattenelemente vermieden werden kann. Aufgrund dieser Eigenschaft der Scharniere ist gewährleistet, dass die Bodenplatte nicht unbeabsichtigt zusammenklappt.

Gemäß einer Weiterbildung der Erfindung weisen die Scharniere der Bodenplatte Auslegerstege auf und sind derart ausgebildet, dass sich die Auslegerstege gegenseitig ineinander verschränken und stabilisieren. Hierdurch wird eine hohe Stabilität der Scharniere erreicht. Vorteilhafterweise sind mehrere erste Auslegerstege eines ersten Scharnierteils in einer Reihe von parallel angeordneten ersten Auslegerstegen angeordnet, wobei zwischen zwei benachbarten Auslegerstegen des Scharnierteils ein Zwischenraum gebildet wird. Hierdurch ergibt sich eine Reihe von ebenfalls parallel angeordneten Zwischenräumen, in die eine Reihe von parallel angeordneten zweiten Auslegerstegen eines zweiten Scharnierteils eingreifen. Erstes und zweites Scharnierteil sind gelenkig verbunden und bilden zusammen ein Scharnier. Jedes dieser beiden Scharnierteile ist einem anderen von zwei banachbarten Plattenelementen zugehörig. Jeder der Auslegerstege verringert seine Höhe zum Endabschnitt des Auslegerstegs hin. Vorzugsweise ist dabei die Höhe des Auslegerstegs im Endabschnitt nur halb so groß wie im dem Endabschnitt benachbarten Hauptabschnitt. Dieser Endabschnitt weist eine nach unten gerichtete, vorzugsweise horizontale, Auflagefläche auf.

Die Begriffe "oben" und "unten" beziehen sich vorliegend auf den entfalteten Zustand des betriebsbereit stehenden Fahrzeugs.

Jeder der Zwischenräume zwischen zwei benachbarten Auslegerstegen weist in einem Anfangsabschnitt eine Stufe mit einer nach oben gerichteten, vorzugsweise horizontalen, Auflagefläche auf. Vorzugsweise ist dabei die Höhe der Stufe nur halb so groß wie die Höhe der Auslegerstege. Im entfalteten Zustand des Fahrzeugs liegen die nach unten gerichteten Auflageflächen der Endabschnitte der Auslegerstege auf den nach oben gerichteten Auflageflächen der Stufen in den Anfangsabschnitten der Zwischenräume. In einem mittleren Abschnitt der ersten Auslegerstege des ersten Scharnierteils sind Drehachsen oder Drehachsenlager vorgesehen. Handelt es sich um Drehachsen, so greifen die Drehachsen in Drehachsenlager in einem mittleren Abschnitt der zweiten Auslegerstege des zweiten Auslegersteges des zweiten Scharnierteils ein. Handelt es sich hingegen um Drehachsenlager, so stehen die Drehachsenlager mit Drehachsen in einem mittleren Abschnitt der zweiten Auslegerstege des zweiten Auslegersteges des zweiten Scharnierteils im Eingriff.

Eine Weiterbildung der Erfindung sieht vor, dass die Auslegerstege derart in Länge, Breite und mit Abrundungen ausgebildet sind, dass ein menschlicher Finger nicht zwischen den Auslegerstegen eingeklemmt werden kann. Dies dient der Sicherheit des Fahrzeugs und reduziert eine mögliche Verletzungsgefahr beim Zusammenfalten und Entfalten des Fahrzeugs. Vorzugsweise weist jeder der Auslegerstege am Endabschnitt eine nach oben gerichtete Abrundung und an dem dem Endabschnitt benachbarten Hauptabschnitt eine nach unten gerichtete Abrundung auf. Die Radien dieser Abrundungen liegen bspw. im Bereich von 3 mm bis 10 mm.

Gemäß einer Weiterbildung der Erfindung ist die Lenkstange stufenlos verstellbar und/oder kann mit definierter Kraft auseinandergezogen und zusammengeschoben werden. Dies ist vorteilhaft, um das Fahrzeug an jede Körpergröße der das Fahrzeug verwendenden Person anzupassen und/oder das Fahrzeug bspw. hinter einem Fahrrad als Fahrradanhänger hinterher ziehen zu können.

Eine Weiterbildung der Erfindung sieht vor, dass am oberen Ende der Lenkstange eine Aufnahme vorgesehen ist, von der Zusatzmodule, bspw. eine Steuervorrichtung zur Geschwindigkeitssteuerung eines Elektromotors zum Antreiben des Fahrzeugs und/oder eine Anhängerkupplung, aufnehmbar sind. Diese Aufnahme am Ende der Lenkstange ermöglicht eine flexible Erweiterung des Fahrzeugs. Bspw. kann das Fahrzeug mit einem Elektromotor ausgestattet sein, mittels dem das Fahren mit dem Fahrzeug erleichtert wird. In diesem Fall benötigt das Fahrzeug eine Steuervorrichtung zur Geschwindigkeitssteuerung, die manuell betätigbar ist. Zu diesem Zweck wird die Aufnahme mit dieser Steuervorrichtung versehen und dient zur Geschwindigkeitssteuerung. In einem anderen Fall dient die Aufnahme zu Montage einer Anhängerkupplung, die es ermöglicht, das Fahrzeug als Anhängefahrzeug an einem anderen Fahrzeug zu ziehen, bspw. an einem Fahrrad.

Gemäß einer Weiterbildung der Erfindung ist an der Bodenplatte, bspw. deren hinteren Plattenelement, eine erste Aufnahme vorgesehen, in die wahlweise eine Radaufhängung mit einem nicht-angetriebenen Rad oder ein Elektromotor mit einem vom Elektromotor angetriebenen Rad austauschbar montiert ist. Diese erste Aufnahme gestattet einen modularen Aufbau des Fahrzeugs und ermöglicht eine Nachrüstung eines zunächst nicht elektrisch angetriebenen Fahrzeugs in ein elektrisch angetriebenes Fahrzeug, ohne dass dazu substantielle Veränderungen der Struktur des Fahrzeugs erforderlich sind.

Zusätzlich oder alternativ ist an der Unterseite der Bodenplatte, bspw. an dem dem hinteren Plattenelement benachbarten Plattenelement, eine zweite derart ausgebildete Aufnahme vorgesehen, dass in sie ein Akkumulator zur elektrischen Energieversorgung des Elektromotors austauschbar montiert werden kann. Ein austauschbarer Akkumulator bietet den Vorteil, dass bei Bedarf mehrere Akkumulatoren, bspw. für eine geplante längere Fahrtstrecke, mitgeführt werden können. Die zweite Aufnahme dient daher zur Erhöhung der Reichweite.

Zusätzlich oder alternativ ist an der Unterseite der Bodenplatte, bspw. an dem dem hinteren Plattenelement benachbarten Plattenelement, eine dritte derart ausgebildete Aufnahme vorgesehen, dass in sie eine Steuereinheit zur Steuerung des Elektromotors austauschbar montiert werden kann. Die dritte Aufnahme dient einer weiteren Verbesserung des modularen Aufbaus des Fahrzeugs und ermöglicht eine einfache Nachrüstung weiterer Komponenten zur Elektrifizierung des Antriebssystems.

Eine Weiterbildung der Erfindung sieht vor, dass zwei voneinander unabhängige Bremsen vorgesehen sind, von denen jede mit dem Fuß betätigbar ist, wobei bei einer Fußbetätigung die Bremse von oben auf ein der Bremse zugeordnetes Rad drückt, wobei eine Feder die Bremse bei Ausbleiben einer Fußbetätigung aufdrückt und wobei die Bremse über einen Umschalthebel zur Bereitstellung einer Feststellbremse auf das Rad drückend fixiert werden kann. Diese Ausgestaltung ermöglicht es, die Bremse sowohl als Betriebsbremse als auch als Feststellbremse einzusetzen. Vorteilhafterweise ist dabei jede der beiden Bremsen unabhängig voneinander betätigbar, so dass der Fahrer, der auf der Bodenplatte stehend fährt, wahlweise entweder den linken oder den rechten Fuß weiter vorne und den anderen Fuß weiter hinten auf der Bodenplatte positionieren kann und dabei trotzdem jeweils eine der beiden Bremsen mit dem hinteren Fuß betätigen kann. Die Bereitstellung zweier unabhängiger Bremsen ermöglicht somit einen Wechsel der Fußstellung, was bei längeren Fahrtzeiten zu einer Entlastung der Beine führt.

Gemäß einer Weiterbildung der Erfindung wirkt die Feder im zusammengefalteten Zustand des Fahrzeugs als Verschlussmechanismus, der den zusammengefalteten Zustand aufrechterhält. Die Feder reduziert damit substanziell die Gefahr eines unbeabsichtigten Entfaltens des Fahrzeugs. Die Feder hat somit eine doppelte Funktion: Sie dient einerseits dazu, während des normalen Fahrbetriebs die Bremse bei ausbleibender Bremsbetätigung gelöst zu halten, während im zusammengefalteten Zustand des Fahrzeugs die Feder verhindert, dass sich das Fahrzeug unbeabsichtigt entfaltet.

Eine Weiterbildung der Erfindung sieht vor, dass an allen vier Ecken der Bodenplatte winkelig ausgebildete Haltekanten angeordnet sind. Derartige Haltekanten bieten sicheren Halt von Waren auf der Bodenplatte gegen Verrutschen. Dies ist insbesondere vorteilhaft beim Transportieren von Getränkekästen.

Gemäß einer Weiterbildung der Erfindung weist das Fahrzeug Hängelaschen und einen an den Hängelaschen montierbaren Gurt auf, der wahlweise als Umhängegurt zum Tragen des Fahrzeugs im zusammengefalteten Zustand oder als Spanngurt zum Fixieren von Lasten auf der Bodenplatte des Fahrzeugs im entfalteten Zustand vorgesehen ist. Der Gurt übernimmt somit mehrere Funktionen.

Eine Weiterbildung der Erfindung sieht vor, dass an dem vorderen Plattenelement ein oder mehrere Prallschütze, bspw. an beiden Seiten einer mit der Lenkachse verbundenen Lenkgabel, angeordnet sind. Derartige Prallschütze dienen als Schutz des Lenkmechanismus vor Hindernissen im Fahrweg und verhindern eine Beschädigung des Lenkmechanismus.

Gemäß einer Weiterbildung der Erfindung ist ein am hinteren Plattenelement angeordneter flexibler Kennzeichenträger vorgesehen. Dieser Kennzeichenträger dient zur Befestigung amtlicher oder versicherungsrechtlicher Kennzeichen. Dank seiner Flexibilität ist es möglich, ihn tief am Fahrzeug anzuordnen, wo grundsätzlich die Gefahr besteht, dass etwaige Bodenhindernisse, bspw. Steine und dergleichen, gegen den Kennzeichenträger schlagen können. Aufgrund seiner Flexibilität kann der Kennzeichenträger jedoch nachgeben und ist vor Bruch geschützt.

Eine Weiterbildung der Erfindung sieht Kabelkanäle vor, in denen elektrische Kabel geführt sind, wobei die Kabelkanäle mehrere Plattenelemente übergreifend ausgebildet sind. Hierdurch werden offen liegende Kabel vermieden und die Gefahr einer Beschädigung der Kabel deutlich reduziert.

Gemäß einer Weiterbildung der Erfindung ist eine mit der Lenkstange nach vorne kippbare Lenkgabel und eine an der Lenkgabel angeordnete Frontleuchte vorgesehen, die mit einer derart ausgebildeten Ausrichtmechanik ausgestattet ist, dass die Frontleuchte trotz unterschiedlicher Kippwinkel der Lenkgabel stets in dieselbe Richtung ausgerichtet bleibt. Dies ermöglicht, das Fahrzeug mit einem Licht auszustatten, das stets im gleichen Winkel zur Horizontalen abstrahlt.

Eine Weiterbildung der Erfindung sieht ein System bestehend aus vorgenanntem Fahrzeug und einer im entfalteten Zustand des Fahrzeugs auf der Bodenplatte anordenbaren und ausfaltbaren Tasche zur Aufnahme von Gegenständen vor, wobei die Tasche im zusammengefalteten Zustand des Fahrzeugs zur Aufnahme des Fahrzeugs dient. Die Erfindung stellt somit zusätzlich eine multifunktionale Tasche bereit, die sowohl zum Transport des Fahrzeugs als auch zum Transport von Waren auf dem Fahrzeug dient.

Weiterbildungen der Erfindung ergeben sich aus den Ansprüchen, der Beschreibung und den Zeichnungen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen.

In der Zeichnung zeigen:
- Fig. 1: ein Ausführungsbeispiel eines erfindungsgemäßen zusammenfaltbaren Fahrzeugs in einer perspektivischen Ansicht,
- Fig. 2: das in Fig. 1 gezeigte Fahrzeug im zusammengefalteten Zustand in einer perspektivischen Ansicht,
- Fig. 3: das in Fig. 2 gezeigte Fahrzeug in einer Seitenansicht,
- Fig. 4: das in Fig. 2 gezeigte Fahrzeug in einem ersten, teilweise um ein erstes Scharnier entfalteten Zustand in einer perspektivischen Ansicht,
- Fig. 5: das in Fig. 4 gezeigte Fahrzeug in einer Seitenansicht,
- Fig. 6: das in Fig. 4 gezeigte Fahrzeug in einem zweiten, teilweise um das erste Scharnier und um ein zweites Scharnier entfalteten Zustand in einer perspektivischen Ansicht,
- Fig. 7: das in Fig. 6 gezeigte Fahrzeug in einer Seitenansicht,
- Fig. 8: das in Fig. 6 gezeigte Fahrzeug in einem dritten, teilweise um das erste Scharnier, das zweite Scharnier und um ein drittes Scharnier entfalteten Zustand in einer perspektivischen Ansicht,
- Fig. 9: das in Fig. 7 gezeigte Fahrzeug in einer Seitenansicht,
- Fig. 10: das in Fig. 8 gezeigte Fahrzeug mit teilweise verschwenkter Lenkgabel in einer perspektivischen Ansicht,
- Fig. 11: das in Fig. 10 gezeigte Fahrzeug mit weiter verschwenkter Lenkgabel und verdrehter Lenkstange in einer perspektivischen Ansicht,
- Fig. 12: das in Fig. 11 gezeigte Fahrzeug mit weiter verschwenkter Lenkgabel und weiter verdrehter Lenkstange in einer perspektivischen Ansicht,
- Fig. 13: das in Fig. 12 gezeigte Fahrzeug mit weiter verschwenkter Lenkgabel und weiter verdrehter und mit einem Lenkgestänge verbundener Lenkstange in einer perspektivischen Ansicht,
- Fig. 14: das in Fig. 13 gezeigte Fahrzeug auf seinen Rädern stehend in einer perspektivischen Ansicht,
- Fig. 15: das in Fig. 14 gezeigte Fahrzeug mit ausgezogener Lenkstange in einer perspektivischen Ansicht,
- Fig. 16: das in Fig. 15 gezeigte Fahrzeug in einer Seitenansicht,
- Fig. 17: das in Fig. 16 gezeigte Fahrzeug mit nach vorne gekippter Lenkstange in einer Seitenansicht,
- Fig. 18: einen vergrößerten Ausschnitt des in Fig. 17 gezeigten Fahrzeugs zur Veranschaulichung des Lenkmechanismus im Bereich der vorderen Räder in einer seitlichen Schnittanschicht,
- Fig. 19: einen vergrößerten Ausschnitt des in Fig. 1 gezeigten Fahrzeugs im entfalteten Zustand zur Veranschaulichung einer Arretierung der Lenkgabel im senkrechten Zustand in einer Ansicht von oben,
- Fig. 20: das in Fig. 1 gezeigte Fahrzeug mit nach links verschwenkter Lenkstange und nach links eingeschlagenen vorderen Rädern in einer perspektivischen Ansicht,
- Fig. 21: das in Fig. 1 gezeigte Fahrzeug mit nach rechts verschwenkter Lenkstange und nach rechts eingeschlagenen vorderen Rädern in einer perspektivischen Ansicht,
- Fig. 22: das in Fig. 1 gezeigte Fahrzeug mit nach vorne gekippter Lenkstange und gerade ausgerichteten vorderen Rädern in einer perspektivischen Ansicht,
- Fig. 23: das in Fig. 22 gezeigte Fahrzeug mit nach vorne gekippter Lenkstange und mit nach rechts verschwenkter Lenkstange und nach rechts eingeschlagenen vorderen Rädern in einer perspektivischen Ansicht,
- Fig. 24: das in Fig. 23 gezeigte Fahrzeug mit nach rechts verschwenkter Lenkstange und nach rechts eingeschlagenen vorderen Rädern in einer Ansicht von unten,
- Fig. 25: das in Fig. 24 gezeigte Fahrzeug mit nach links verschwenkter Lenkstange und nach links eingeschlagenen vorderen Rädern in einer Ansicht von unten,
- Fig. 26: das in Fig. 1 gezeigte Fahrzeug in einem noch nicht vollständig zusammengefaltetem Zustand zur Veranschaulichung einer Doppelfunktion einer Feder einer Bremse des Fahrzeugs einerseits zum Lösen der Bremse und andererseits zur Aufrechterhaltung eines zusammengefalteten Zustands des Fahrzeugs,
- Fig. 27: das in Fig. 26 gezeigte Fahrzeug im zusammengefalteten Zustand mit zugespannter Bremse,
- Fig. 28: das in Fig. 27 gezeigte Fahrzeug mit gelöster Bremse und Aufrechterhaltung des zusammengefalteten Zustands des Fahrzeugs,
- Fig. 29: einen vergrößerten Ausschnitt des in Fig. 1 gezeigten Fahrzeugs in einer Seitenansicht von hinten auf das hintere linke Rad mit gelöster Bremse,
- Fig. 30: den in Fig. 29 gezeigten Ausschnitt in teilweiser Schnittdarstellung,
- Fig. 31: einen vergrößerten Ausschnitt des in Fig. 1 gezeigten Fahrzeugs in einer Seitenansicht von hinten auf das hintere linke Rad mit festgestellter Bremse,
- Fig. 32: den in Fig. 31 gezeigten Ausschnitt in teilweiser Schnittdarstellung,
- Fig. 33-38: je einen vergrößerten Ausschnitt des in Fig. 1 gezeigten Fahrzeugs im Bereich der Lenkgabel mit einer daran angeordneten Frontleuchte nebst Ausrichtmechanik in verschiedenen Kippwinkeln der Lenkgabel,
- Fig. 39: das in Fig. 1 gezeigte Fahrzeug mit aufgerichteter Lenkstange und ohne Beladung,
- Fig. 40: das in Fig. 39 gezeigte Fahrzeug mit aufgenommenem Getränkekasten,
- Fig. 41: das in Fig. 40 gezeigte Fahrzeug mit aufgenommenem Getränkekasten mit nach vorne gekippter Lenkstange in Funktion eines Handwagens,
- Fig. 42: das in Fig. 1 gezeigte Fahrzeug mit eingeschobener Lenkstange in einer Seitenansicht von hinten,
- Fig. 43: das in Fig. 41 gezeigte Fahrzeug mit eingeschobener Lenkstange in einer Seitenansicht von vorne,
- Fig. 44: das in Fig. 41 gezeigte Fahrzeug mit eingeschobener Lenkstange in einer Seitenansicht von links,
- Fig. 45: das in Fig. 41 gezeigte Fahrzeug mit eingeschobener Lenkstange in einer Seitenansicht von rechts,
- Fig. 46: das in Fig. 41 gezeigte Fahrzeug mit eingeschobener Lenkstange in einer Ansicht von oben,
- Fig. 47: das in Fig. 41 gezeigte Fahrzeug mit eingeschobener Lenkstange in einer Ansicht von unten,
- Fig. 48: einen vergrößerten Ausschnitt des hinteren Plattenelements der Bodenplatte des in Fig. 1 gezeigten Fahrzeugs im Bereich des rechten hinteren Rades in einer perspektivischen Ansicht von unten zur Veranschaulichung eines gesperrt dargestellten Mechanismus zur Aufrechterhaltung des entfalteten Zustands des Fahrzeugs im Bereich des hinteren Scharniers,
- Fig. 49: den Ausschnitt gemäß Fig. 48 in einer anderen perspektivischen Ansicht,
- Fig. 50: den in den Fig. 48 und 49 gezeigten Mechanismus im entsperrten Zustand,
- Fig. 51: den in den Fig. 48 bis 50 gezeigten Mechanismus im gesperrten Zustand,
- Fig. 52: den in den Fig. 48 bis 51 gezeigten entsperrten Mechanismus im zusammengefalteten Zustand des Fahrzeugs,
- Fig. 53: einen Ausschnitt des in Fig. 1 gezeigten Fahrzeugs mit auf einem Kennzeichenträger angeordnetem Kennzeichen in einer Seitenansicht von hinten vor Anbringung des Kennzeichenträgers am Fahrzeug,
- Fig. 54: den in Fig. 53 gezeigten Kennzeichenträger in einer Seitenansicht von hinten,
- Fig. 55: den in Fig. 54 gezeigten Kennzeichenträger in einer Seitenansicht von schräg hinten,
- Fig. 56: den in Fig. 53 gezeigten Ausschnitt in einer perspektivischen Ansicht nach Anbringung des Kennzeichenträgers am Fahrzeug,
- Fig. 57: das in Fig. 1 gezeigte Fahrzeug im zusammengefalteten Zustand gemäß Fig. 2 und 3 mit Blick auf das größte der Plattenelemente der Bodenplatte,
- Fig. 58: das in Fig. 57 gezeigte Fahrzeug in einer Darstellung ohne das größte Plattenelement,
- Fig. 59: einen Ausschnitt des in Fig. 1 gezeigten Fahrzeugs im Bereich des linken hinteren Rades in einer perspektivischen Ansicht von unten mit demontiertem Elektromotor und davon angetriebenem hinteren Rad,
- Fig. 60: den Ausschnitt gemäß Fig. 59, jedoch mit einer demontierten Radaufhängung mit einem nicht-angetriebenen Rad statt dem in Fig. 59 gezeigten Elektromotor nebst davon angetriebenem hinteren Rad,
- Fig. 61: einen Ausschnitt des in Fig. 1 gezeigten Fahrzeugs im Bereich der hinteren Räder in einer perspektivischen Ansicht von unten mit montiertem Elektromotor und davon angetriebenem hinteren Rad, einem montierten Akkumulator zur elektrischen Energieversorgung sowie eine Steuereinheit,
- Fig. 62: den Ausschnitt gemäß Fig. 61, jedoch mit demontiertem Akkumulator zur elektrischen Energieversorgung,
- Fig. 63: den Ausschnitt gemäß Fig. 61, jedoch mit demontiertem Elektromotor und davon angetriebenem hin- teren Rad, demontiertem Akkumulator zur elektrischen Energieversorgung und demontierter Steuereinheit zur Steuerung des Elektromotors,
- Fig. 64: den in Fig. 63 gezeigten Elektrobausatz mit Elektromotor und davon angetriebenem hinteren Rad, Akkumulator zur elektrischen Energieversorgung, Frontleuchte, Rückleuchte und Steuereinheit zur Steuerung des Elektromotors sowie von Frontleuchte und Rückleuchte,
- Fig. 65: einen Ausschnitt des in Fig. 14 gezeigten Fahrzeugs im Bereich der zusammengeschobenen Lenkstange und einer am Ende der Lenkstange aufgesetzten Steuervorrichtung,
- Fig. 66: einen Ausschnitt des in Fig. 65 gezeigten Bereichs des oberen Endes der Lenkstange mit aufgesetzter winkelbeweglicher Steuervorrichtung zur Geschwindigkeitssteuerung des Fahrzeugs in einer seitlich nach rechts verschwenkten Darstellung,
- Fig. 67: die in Fig. 66 gezeigte winkelbewegliche Steuervorrichtung in einer seitlich nach links verschwenkten Darstellung,
- Fig. 68: einen Ausschnitt des in Fig. 65 gezeigten Bereichs des unteren Endes der Lenkstange in Schnittdarstellung zur Veranschaulichung einer Vorrichtung zur Befestigung der Lenkstange am Lenkmechanismus und der inneren Struktur von Teleskopelementen der Lenkstange,
- Fig. 69: den Ausschnitt gemäß Fig. 68 mit ausgezogenen Teleskopelementen,
- Fig. 70: das in Fig. 3 gezeigte Fahrzeug im zusammengefalteten Zustand mit in Fig. 65 bis 67 gezeigter, seitlich am Fahrzeug eingeklappter Steuervorrichtung,
- Fig. 71: einen Ausschnitt des in Fig. 1 gezeigten Fahrzeugs im Bereich des linken vorderen Rades in einer perspektivischen Schnittdarstellung,
- Fig. 72: den in Fig. 71 gezeigten Ausschnitt in einer seitlichen Schnittdarstellung,
- Fig. 73: das in Fig. 1 gezeigte Fahrzeug im entfalteten Zustand mit der Unterseite nach oben in einer seitlichen Schnittdarstellung zur Veranschaulichung von - mehrere Plattenelemente übergreifenden - Kabelkanälen zur Frontleuchte,
- Fig. 74: das in Fig. 73 gezeigte Fahrzeug im zusammengefalteten Zustand in einer seitlichen Schnittdarstellung,
- Fig. 75: das in Fig. 73 gezeigte Fahrzeug im entfalteten Zustand mit der Unterseite nach oben in einer seitlichen Schnittdarstellung zur Veranschaulichung von - mehrere Plattenelemente übergreifenden - Kabelkanälen zur Rückleuchte,
- Fig. 76: das in Fig. 75 gezeigte Fahrzeug im zusammengefalteten Zustand in einer seitlichen Schnittdarstellung,
- Fig. 77: das in Fig. 75 gezeigte Fahrzeug in umgekehrter Blickrichtung zur Veranschaulichung von - mehrere Plattenelemente übergreifenden - Kabelkanälen zur Rückleuchte,
- Fig. 78: das in Fig. 77 gezeigte Fahrzeug im zusammengefalteten Zustand in einer seitlichen Schnittdarstellung,
- Fig. 79: einen Ausschnitt des in Fig. 1 gezeigten Fahrzeugs im entfalteten Zustand im Bereich eines Scharniers zwischen zwei Plattenelementen in einer Ansicht von unten zur Veranschaulichung des Verlaufs eines Kabelkanals durch das Scharnier,
- Fig. 80: einen Ausschnitt des in Fig. 1 gezeigten Fahrzeugs im entfalteten Zustand im Bereich des an das den Akkumulator aufnehmende Plattenelement angrenzenden Scharniers in einer Ansicht von unten zur Veranschaulichung des Verlaufs eines Kabelkanals durch das Scharnier,
- Fig. 81: eine faltbare Tragetasche zur Aufnahme des in Fig. 1 gezeigten Fahrzeugs im zusammengefalteten Zustand,
- Fig. 82: die Tragetasche gemäß Fig. 81 in einer Schnittdarstellung,
- Fig. 83: die Tragetasche gemäß Fig. 81 in einem entfalteten Zustand,
- Fig. 84: die Tragetasche gemäß Fig. 83 auf der Bodenplatte des Fahrzeugs gemäß Fig. 1,
- Fig. 85: die Tragetasche gemäß Fig. 83 auf einem - auf der Bodenplatte des Fahrzeugs gemäß Fig. 1 stehenden - Getränkekasten,
- Fig. 86: das Fahrzeug gemäß Fig. 84 mit an Hängelaschen montierten Taschen-Gurten,
- Fig. 87: die in Fig. 86 gezeigten Taschen-Gurte montiert als Spanngurt zum Fixieren der Tragetasche,
- Fig. 88: einen Gurt montiert als Spanngurt zum Fixieren eines Getränkekastens in einer perspektivischen Ansicht von seitlich vorne,
- Fig. 89: den in Fig. 88 gezeigten Gurt montiert als Spanngurt zum Fixieren des Getränkekastens in einer perspektivischen Ansicht von seitlich hinten,
- Fig. 90: das Fahrzeug gemäß Fig. 84 mit von der Hängelasche demontiertem Gurt,
- Fig. 91: das Fahrzeug gemäß Fig. 90 mit an der Hängelasche montiertem Gurt,
- Fig. 92: einen Ausschnitt des Heckbereichs des Fahrzeugs gemäß Fig. 1 mit montiertem Kennzeichenträger,
- Fig. 93: das Fahrzeug gemäß Fig. 86 im zusammengefaltetem Zustand mit montiertem Gurt,
- Fig. 94: eine perspektivische Ansicht zweier Scharnierteile eines Scharniers zwischen zwei Plattenelementen in einem auseinandergenommenen Zustand,
- Fig. 95: eine perspektivische Ansicht der zwei in Fig. 94 gezeigten Scharnierteile in einem verbundenen Zustand,
- Fig. 96: eine seitliche Ansicht der zwei in Fig. 94 gezeigten Scharnierteile im auseinandergenommenen Zustand,
- Fig. 97: eine seitliche Ansicht der zwei in Fig. 96 gezeigten Scharnierteile im verbundenen Zustand,
- Fig. 98: eine seitliche Ansicht der zwei in Fig. 97 gezeigten Scharnierteile im verbundenen Zustand nach einer 45°-Streckung,
- Fig. 99: eine seitliche Ansicht der zwei in Fig. 97 gezeigten Scharnierteile im verbundenen Zustand nach einer 90°-Streckung,

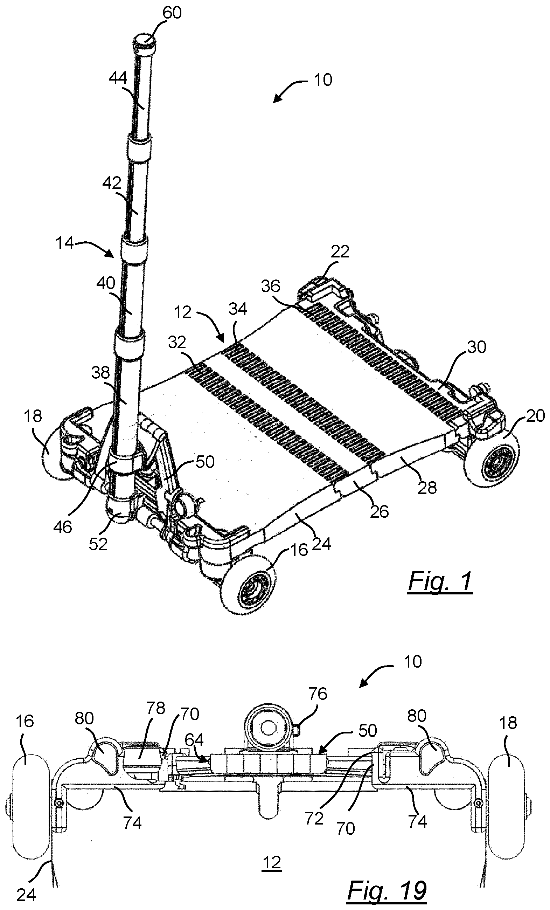

Fig. 1 zeigt ein Ausführungsbeispiel eines erfindungsgemäßen faltbaren Fahrzeugs 10 im entfalteten Zustand. In diesem Zustand ist das Fahrzeug 10 wahlweise als Roller zum Transport einer Person oder als Handwagen zum Transport von Waren nutzbar.

Das Fahrzeug 10 weist eine Bodenplatte 12, eine Lenkstange 14 und vier Räder 16, 18, 20, 22 auf. Die Bodenplatte ist in mehrere Plattenelemente 24, 26, 28, 30 geteilt. Im dargestellten Ausführungsbeispiel sind es vier derartige Plattenelemente. Bei alternativen Ausgestaltungen sind aber auch nur drei derartige Plattenelemente oder fünf oder mehr derartige Plattenelemente möglich. Zwei benachbarte Plattenelemente sind jeweils durch ein Scharnier 32, 34, 36 verbunden. Im dargestellten Ausführungsbeispiel sind die Plattenelemente 24 und 26 über das Scharnier 32, die Plattenelemente 26 und 28 über das Scharnier 34 und die Plattenelemente 28 und 30 über das Scharnier 36 miteinander verbunden. Im dargestellten entfalteten Zustand des Fahrzeugs bildet die Bodenplatte 12 eine durchgängige ebene Fläche.

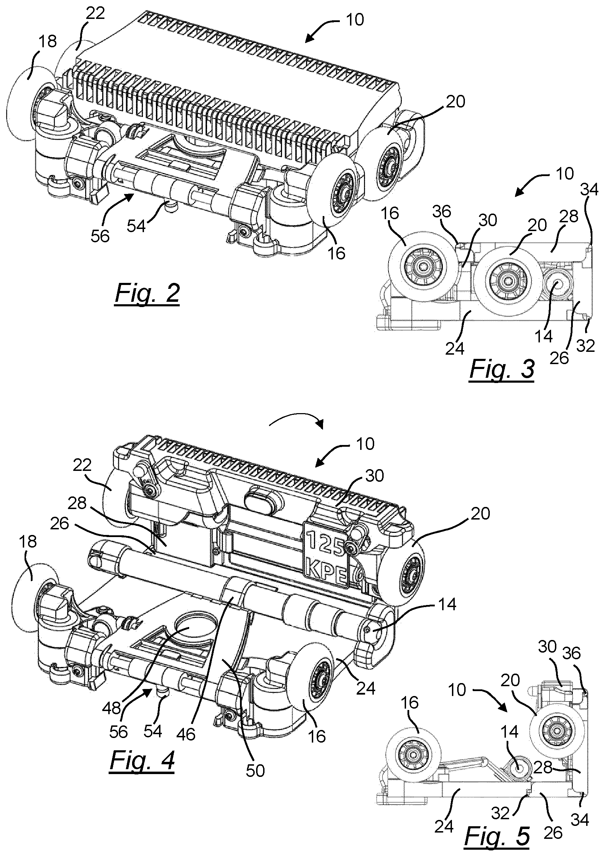

Das Fahrzeug 10 kann in einen kompakten Zustand zusammengefaltet werden, wie es in den Figuren 2 und 3 dargestellt ist. Die Scharniere 32, 34, 36 sind zu diesem Zweck derart ausgebildet, dass die Bodenplatte 12 in Richtung der Unterseite des Fahrzeugs 10 zusammenfaltbar ist. Die beiden vorderen Räder 16, 18 sind an dem vorderen äußeren Plattenelement 24 angeordnet. Die beiden hinteren Räder 20, 22 sind an dem hinteren äußeren Plattenelement 30 angeordnet. Die Lenkstange 14 ist als Teleskopstange ausgebildet, die mehrere teleskopierbare Einzelelemente 38, 40, 42, 44 aufweist. Fig. 3 zeigt, wie im zusammengefalteten Zustand die Lenkstange 14 zwischen den Plattenelementen 24, 26, 28, 30 verstaut ist.

Fig. 4 und Fig. 5 zeigen das Fahrzeug in einem ersten, teilweise um das Scharnier 32 entfalteten Zustand, wie die Lenkstange 14 zwischen den Plattenelementen 24, 26, 28, 30 eingebettet wird. Die Lenkstange 14 ist mit einer Lenkachse 46 verbunden, über die durch seitliches Schwenken der Lenkstange 14 um die Lenkachse 46 die Räder 16, 18 am vorderen Plattenelement 24 gelenkt werden können. In Fig. 1 ist die Lenkstange 14 in aufrechter Position dargestellt. Die Lenkstange 14 kann jedoch in verschiedene Kipppositionen nach vorne gekippt und sodann wieder nach hinten aufgerichtet werden. In jeder dieser Kipppositionen können durch seitliches Schwenken der Lenkstange 14 die vorderen Räder 16, 18 gelenkt werden. Das Lenken ist damit unabhängig von der Kippposition der Lenkstange 14. Dies ermöglicht, dass das Fahrzeug 10 an der Lenkstange 14 und zwar mit nach vorne gekippter Lenkstange 14 gezogen und zugleich dabei gelenkt werden kann.

Die Lenkachse 46 ist im entfalteten Zustand des Fahrzeugs 10 zumindest teilweise in einer kreisrunden Öffnung 48 einer Lenkgabel 50 angeordnet, wie in Fig. 1 dargestellt, während die Lenkachse 46 im zusammengefalteten Zustand des Fahrzeugs 10 beabstandet zu der Öffnung 48 platziert wird, wie in Fig. 4 dargestellt.

Ein unteres Ende der Lenkstange 14 weist einen Verschluss 52 auf, der mit einem Zapfen 54 drehbar verbunden werden kann. Der Zapfen 54 bildet einen Teil eines Lenkgestänges 56, das im entfalteten Zustand des Fahrzeugs 10 eine seitliche Schwenkbewegung der Lenkstange 14 in eine Lenkbewegung der vorderen Räder 16, 18 umsetzt. Der Verschluss 52 ist durch Betätigung eines beweglichen Knopfes vom Zapfen 54 lösbar. Vor dem Zusammenfalten des Fahrzeugs 10 wird dieser Knopf betätigt und somit die vom Verschluss 52 gebildete Verbindung vom Zapfen 54 gelöst, so dass die Lenkstange 14 vom Lenkgestänge 56 entkoppelt werden kann.

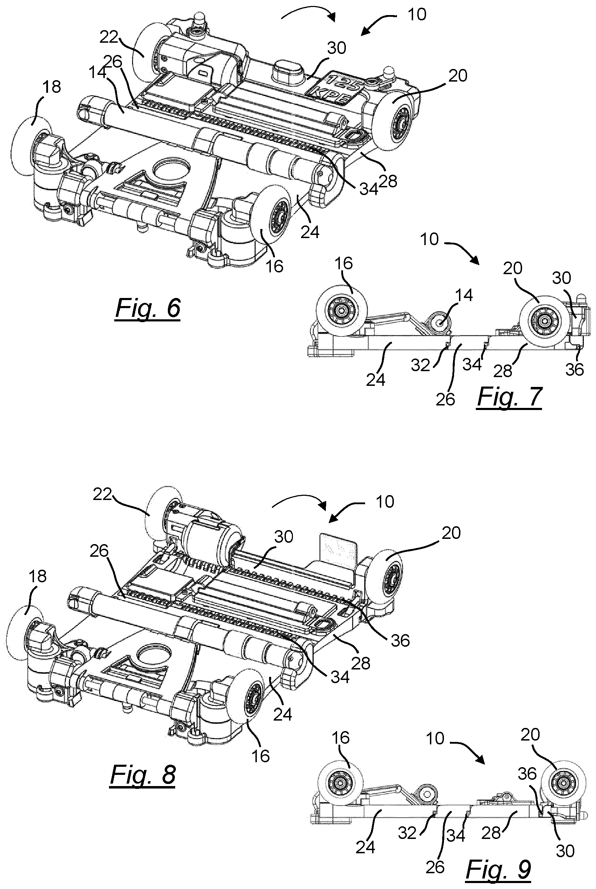

Die Figuren 4 und 5 zeigen das Entfalten des Fahrzeugs 10 um das Scharnier 32. Die Figuren 6 und 7 zeigen das weitere Entfalten des Fahrzeugs 10 um das Scharnier 34. Die Figuren 7 und 8 zeigen das weitere Entfalten des Fahrzeugs 10 um das Scharnier 36.

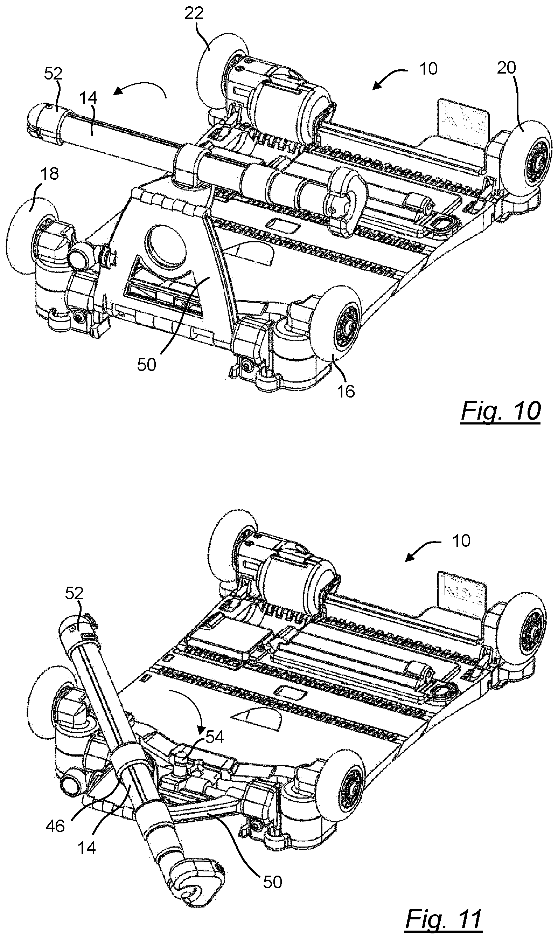

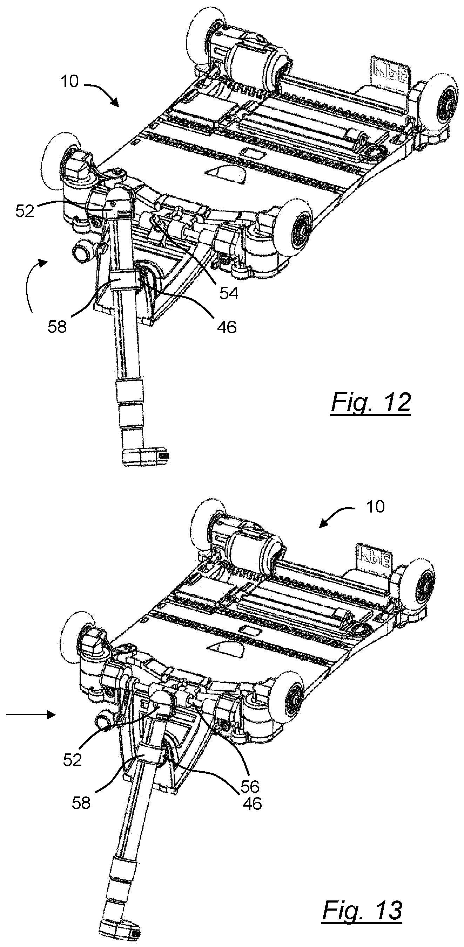

Fig. 10 veranschaulicht das Anheben der Lenkstange 14 und das damit verbundene Verschwenken der Lenkgabel 50, das erforderlich ist, um die Lenkstange 14 in ihre betriebsbereite Position zu bringen. Fig. 11 zeigt das Verdrehen der Lenkstange 14 um die Lenkachse 46, um den Verschluss 52 an den Zapfen 54 anzunähern. Um die Annäherung des Verschlusses 52 an den Zapfen 54 zu vollenden, wird die Lenkstange 14 entlang eines mit der Lenkachse 46 verbundenen Halterings 58 verschoben, wie in den Figuren 12 und 13 dargestellt. Fig. 13 zeigt schließlich, dass der Verschluss 52 auf den Zapfen 54 aufgesteckt ist und somit die Lenkstange mit dem Lenkgestänge 56 verbunden ist.

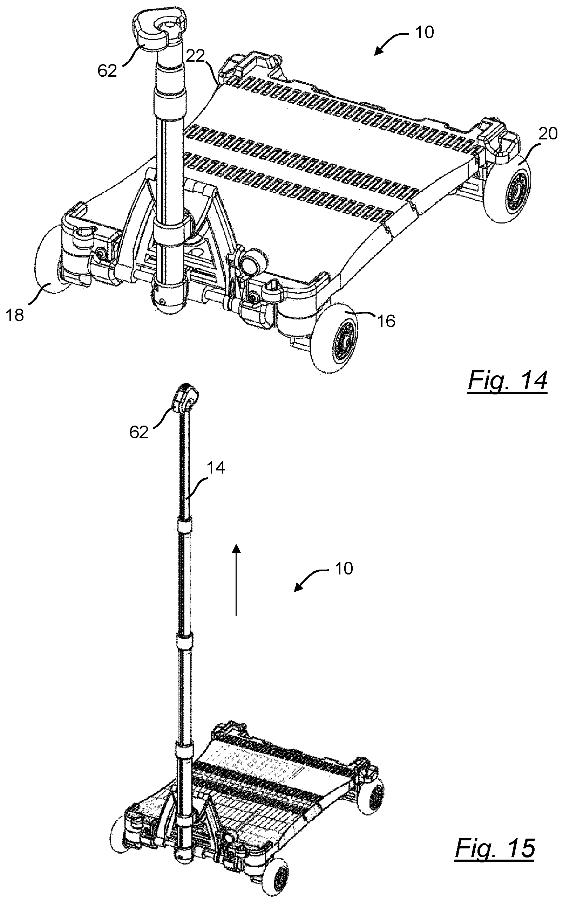

Während die Figuren 6, 8, 10-13 das Fahrzeug 10 und die Bodenplatte 12 von unten zeigen, zeigt Fig. 14 das Fahrzeug 10 in fahrbarer Position, in der das Fahrzeug 10 auf seinen Rädern 16, 18, 20, 22 steht. Während gemäß Fig. 14 die Lenkstange 14 sich noch im zusammengeschobenen Zustand befindet, zeigt Fig. 15 die Lenkstange 14 im ausgezogenen Zustand.

Fig. 15 entspricht im Wesentlichen Fig. 1. Fig. 1 zeigt am oberen Ende der Lenkstange 14 eine unbestückte Aufnahme 60. Diese Aufnahme 60 dient zur Befestigung von Zusatzmodulen. In den Figuren 2 bis 15 ist die Aufnahme 60 mit einer Steuervorrichtung 62 zur Geschwindigkeitssteuerung des Fahrzeugs 10 bestückt. Alternativ kann die Aufnahme 60 mit einer Anhängerkupplung bestückt werden, mittels der das Fahrzeug 10 bspw. an einem Fahrrad angekuppelt werden kann. Die Steuervorrichtung 62 ist seitlich verschwenkbar und in den Figuren 2-15 in unterschiedlichen Schwenkpositionen dargestellt.

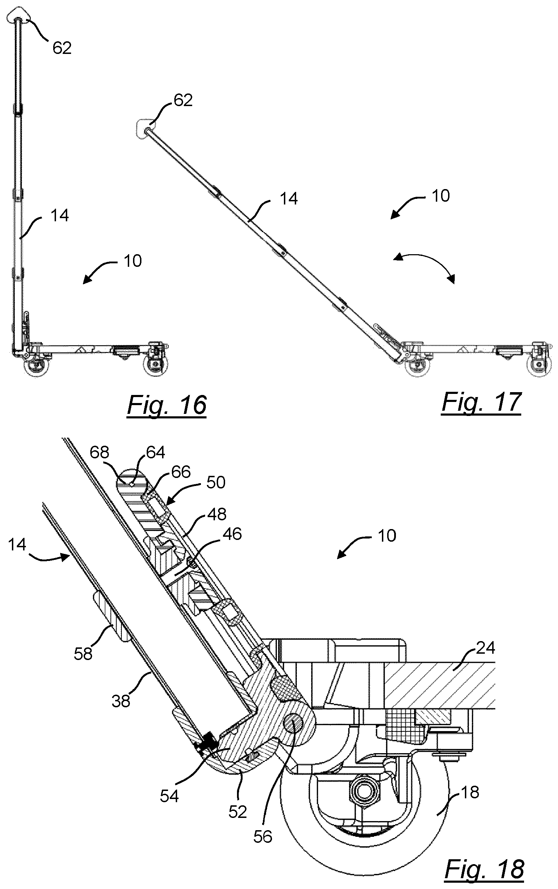

Fig. 16 zeigt das Fahrzeug 10 im entfalteten Zustand mit aufrechtstehender Lenkstange. Fig. 17 zeigt das Fahrzeug 10 mit nach vorne gekippter Lenkstange 14, mit der das Fahrzeug gezogen werden kann. Fig. 18 zeigt einen vergrößerten Ausschnitt des in Fig. 17 gezeigten Bereichs des Fahrzeugs 10 um die vorderen Räder, von denen nur das rechte vordere Rad 18 gezeigt ist, um den Lenkmechanismus genauer zu veranschaulichen. Die Lenkstange 14 ist mit ihrem untersten teleskopierbaren Einzelelement 38 mittels des Halterings 58 um die Lenkachse 46 seitlich verschwenkbar. Die Lenkachse 46 ist in diesem Zustand in der kreisrunden Öffnung 48 arretiert. Die kreisrunde Öffnung 48 ist in der Lenkgabel 50 angeordnet. Die Lenkgabel 50 weist im oberen Bereich ein Scharnier 64 auf, welches die Lenkgabel 50 gelenkig teilt. Ein erster Teil 66 der Lenkgabel 50 ist gelenkig mit dem Lenkgestänge 56 und dem Scharnier 64 verbunden. Ein zweiter Teil 68 der Lenkgabel 50 ist mit dem Scharnier 64, an dem Haltering 58 und der Lenkachse 46 verbunden.

Der Verschluss 52 verbindet in dem in Fig. 18 veranschaulichten Zustand das Einzelelement 38 der Teleskopstange bzw. Lenkstange 14 mit dem Zapfen 54. Dabei befindet sich die Lenkachse 46 in der kreisrunden Öffnung 48. Beim Lenken wird die Lenkstange 14 seitlich um die Lenkachse 46 verschwenkt, wodurch der Verschluss 52 den Zapfen 54 entlang des Lenkgestänges 56 verschiebt, so dass die vorderen Räder 16, 18 verstellt werden. Das Fahrzeug 10 ist somit lenkbar.

Fig. 19 zeigt in einer Ansicht von oben einen vergrößerten Ausschnitt des in Fig. 1 gezeigten Fahrzeugs bzw. des in Fig. 16 gezeigten Fahrzeugs 10 ohne Steuervorrichtung 62 zur Veranschaulichung einer Arretierung der Lenkgabel 50 im senkrechten Zustand. Sie ermöglicht, dass die und mit ihr die Lenkstange 14 senkrecht stehen bleibt, auch wenn der Nutzer des Fahrzeugs die Lenkstange 14 nicht in Position hält. Bevorzugt wird die Arretierung durch ein Klemmelement 70 bereitgestellt, das an der Bodenplatte 12, insbesondere dem vorderen Plattenelement 24, angeordnet ist. Dieses Klemmelement 70 weist bevorzugt eine Klemmnase 72 auf, die die Lenkgabel 50 in der senkrechten Position festklemmt. Vorteilhafterweise ist auf jeder Seite der Lenkgabel 50 ein solches Klemmelement 70 vorgesehen. Bevorzugt sind die Klemmelemente an Haltekanten 74 ausgebildet, die an den vorderen beiden Ecken der Bodenplatte 12 angeordnet sind. Die Haltekanten 74 sind winkelig ausgebildet und verhindern ein Verrutschen von auf der Bodenplatte 12 aufgeladenen Waren, bspw. Getränkekästen, über die Ecken der Bodenplatte 12 hinaus.

Fig. 19 zeigt ferner einen beweglichen Knopf 76. Durch Betätigung des Knopfes 76 wird der Verschluss 52 geöffnet und kann vom Zapfen 54 getrennt werden. Dies ermöglicht eine einfache Demontage der Lenkstange 14 während des Zusammenfaltens des Fahrzeugs 10. Fig. 19 zeigt ferner eine Frontleuchte 78, mit der bei Dunkelheit der Fahrweg beleuchtet werden kann. Ferner zeigt Fig. 19 Hängelaschen 80, an denen ein Gurt montiert werden kann.

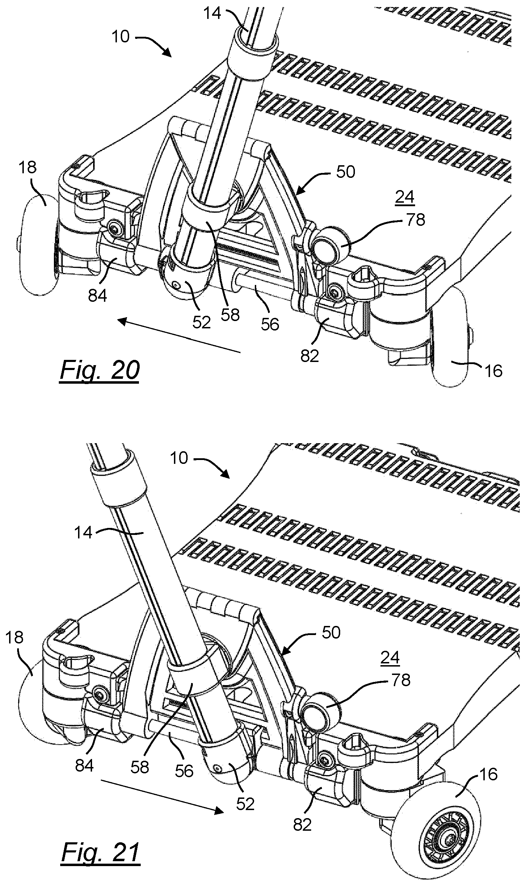

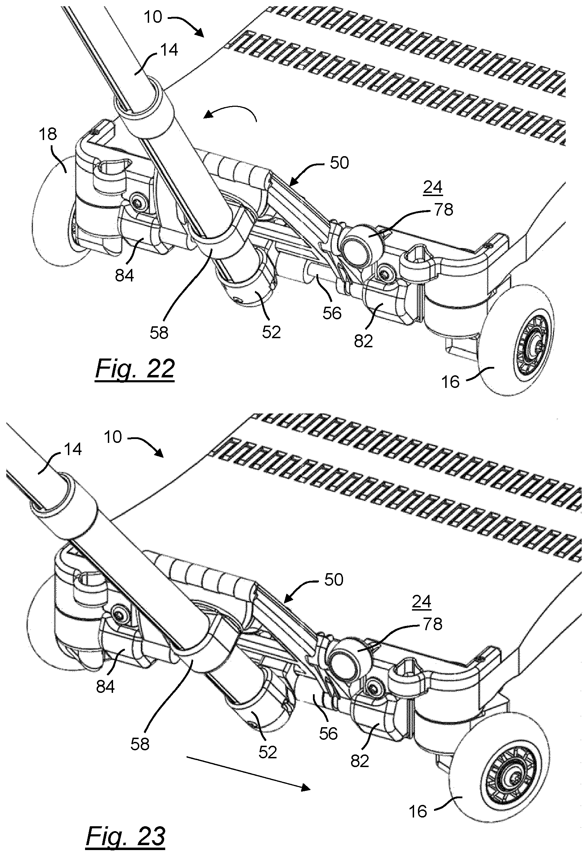

Figuren 20 bis 22 zeigen die Lenkstange 14 in verschiedenen Positionen: Fig. 20 zeigt die Lenkstange 14 in einer nach links verschwenkten Position mit nach links eingeschlagenen vorderen Rädern 16, 18, während Fig. 21 die Lenkstange 14 in einer nach rechts verschwenkten Position mit nach rechts eingeschlagenen vorderen Rädern 16, 18 zeigt. Die Lenkstange 14 ist in den Figuren 20 und 21 nur geringfügig nach vorne gekippt. Demgegenüber ist die Lenkstange 14 in den Figuren 22 und 23 signifikant weiter nach vorne gekippt. In Fig. 22 ist die Lenkstange 14 nicht nach links oder rechts verschwenkt, so dass die vorderen Räder 16, 18 geradeaus ausgerichtet sind. In Fig. 23 ist die Lenkstange 14 nach rechts verschwenkt, so dass die vorderen Räder 16, 18 ebenfalls nach rechts verschwenkt sind.

Die Figuren 20 bis 23 veranschaulichen, wie der Verschluss 52 das Lenkgestänge 56 seitlich verschiebt, wenn die Lenkstange seitlich verschwenkt wird. Das Kippen der Lenkstange nach vorne verändert hingegen nicht einen Einschlagwinkel der vorderen Räder 16, 18. Prallschütze 82, 84 rechts und links vom Lenkgestänge 56 schützen die Komponenten der Lenkung vor Beschädigung durch Hindernisse im Fahrweg, bspw. Bordsteinkanten, etc.

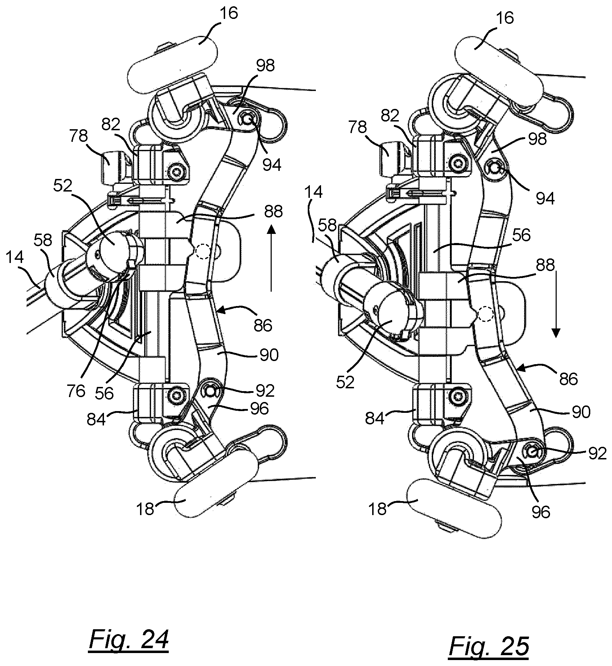

Figuren 24 und 25 zeigen den vorderen Bereich des Fahrzeugs in einer Ansicht von unten, wobei Fig. 24 das Fahrzeug 10 mit nach rechts verschwenkter Lenkstange 14 und nach rechts eingeschlagenen vorderen Rädern 16, 18 gemäß Fig. 21 zeigt. Fig. 25 zeigt das Fahrzeug 10 mit nach links verschwenkter Lenkstange 14 und nach links eingeschlagenen vorderen Rädern 16, 18 gemäß Fig. 20. Ein mehrteiliger Lenkmechanismus 86 steht mit dem Zapfen 54 in Verbindung und überträgt eine seitliche Bewegung des Zapfens 54 in eine Schwenkbewegung der Räder 16, 18. Der Lenkmechanismus 86 weist ein axial entlang dem Lenkgestänge 56 verschiebbares Element 88 auf, das mit einem Lenkorgan 90 verbunden ist. Das Lenkorgan 90 ist über Gelenke 92, 94 mit Lenkarmen 96, 98 verbunden, mittels denen der Lenkwinkel der vorderen Räder 16, 18 bestimmt wird.

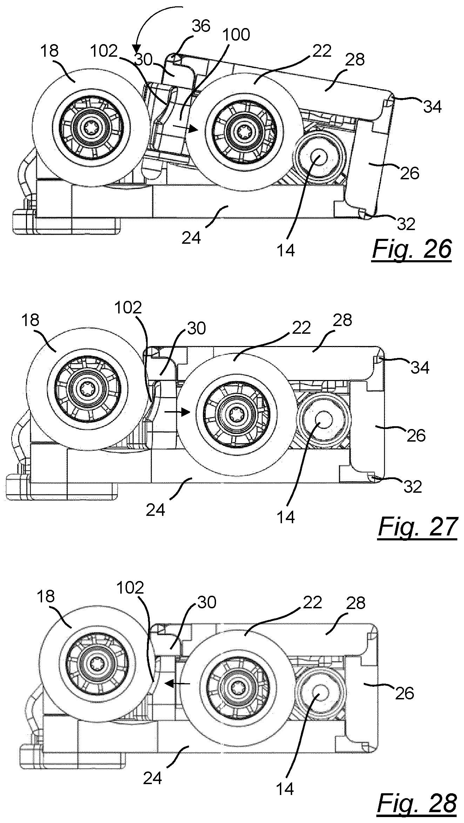

Figuren 26 bis 28 zeigen das Fahrzeug 10 in verschiedenen Zuständen: Fig. 26 zeigt das Fahrzeug 10 in einem noch nicht vollständig zusammengefalteten Zustand, in dem eine Bremse 100 auf das hintere Rad 22 drückt, während das Fahrzeug 10 zusammengefaltet wird. Die Gelenke 28, 30 sind bereits in ihre Endposition gefaltet, während das Gelenk 32 noch nicht vollständig seine Endposition erreicht hat. Beim Zusammenklappen des Fahrzeugs 10 wird die Bremse 100 vom vorderen Rad 18 gegen eine Federkraft gegen das hintere Rad 22 gedrückt. Fig. 27 zeigt, wie zunächst noch die Bremse 100 in Richtung des Rades 22 drückt. Die Feder innerhalb der Bremse 100 drückt die Bremse 100 jedoch wieder auf und zwar derart, dass sich eine Anlagefläche 102 der Bremse 100 gegen das vordere Rad 18 drückt und somit das Fahrzeug im zusammengefalteten Zustand hält.

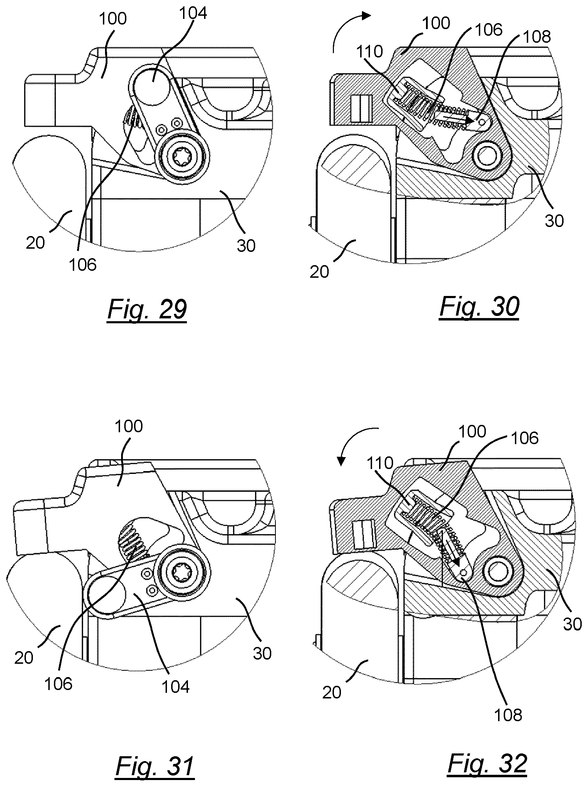

Figuren 29 bis 32 zeigen die Bremse 100 am linken hinteren Rad 20 in einer Seitenansicht von hinten. Die Bremse 100 ist mit einem Umschalthebel 104 versehen, der mit einer Feder 106 zusammenwirkt. Die Feder 106 ist im Inneren der Bremse 100 angeordnet und drückt mit ihrem ersten Ende ein Druckelement 108 entweder in eine erste Position im Inneren des Umschalthebels 104, wie in Fig. 30 dargestellt, wenn der Umschalthebel seine erste in Fig. 29 dargestellte Schaltposition einnimmt, oder in eine zweite Position im Inneren des Umschalthebels 104, wie in Fig. 32 dargestellt, wenn der Umschalthebel seine zweite in Fig. 31 dargestellte Schaltposition einnimmt. Das zweite Ende der Feder 106 ist in einer Aufnahme 110 abgestützt, welche am Plattenelement 30 angeordnet ist. Befindet sich das Druckelement 108 in der ersten Position gemäß Fig. 30, wird die Bremse 100 vom Rad 20 weggedrückt und ist somit gelöst. Die Bremse 100 kann gleichwohl in dieser Position vom Nutzer des Fahrzeugs 10 gedrückt werden. Sie dient in diesem Fall als Betriebsbremse. Befindet sich das Druckelement 108 in der zweiten Position gemäß Fig. 32, wird die Bremse 100 zum Rad 20 hin gedrückt und somit zugespannt. Dieses Zuspannen erfolgt durch die in Fig. 31 gezeigte Stellung des Umschalthebels 104. Die Bremse 100 dient in diesem Fall als Feststellbremse.

Der Umschalthebel 104 kann somit zwei Schaltpositionen einnehmen: In der ersten Schaltposition dient die Bremse 100 als Betriebsbremse. D.h., die Bremse 100 dient dazu, während des Fahrbetriebs das Fahrzeug 10 einbremsen zu können. In der zweiten Schaltposition dient die Bremse 100 als Feststellbremse. D.h., die Bremse 100 dient in der zweiten Schaltposition dazu, das Fahrzeug 10 im ruhenden Zustand vor einem unbeabsichtigten Wegrollen zu bewahren. Diese zweite Schaltposition wird bevorzugt beim Parken des Fahrzeugs verwendet, insbesondere bei einer geneigten Parkfläche.Befindet sich der Umschalthebel 104 in seiner ersten Schaltposition, drückt die Feder 106 die Bremse 100 auf, wenn eine Fußbetätigung der Bremse 100 ausbleibt. Die Feder 106 wirkt im zusammengefalteten Zustand des Fahrzeugs 10 als Verschlussmechanismus, der den zusammengefalteten Zustand des Fahrzeugs 10 aufrechterhält. Dies ist beispielhaft in Fig. 28 dargestellt.

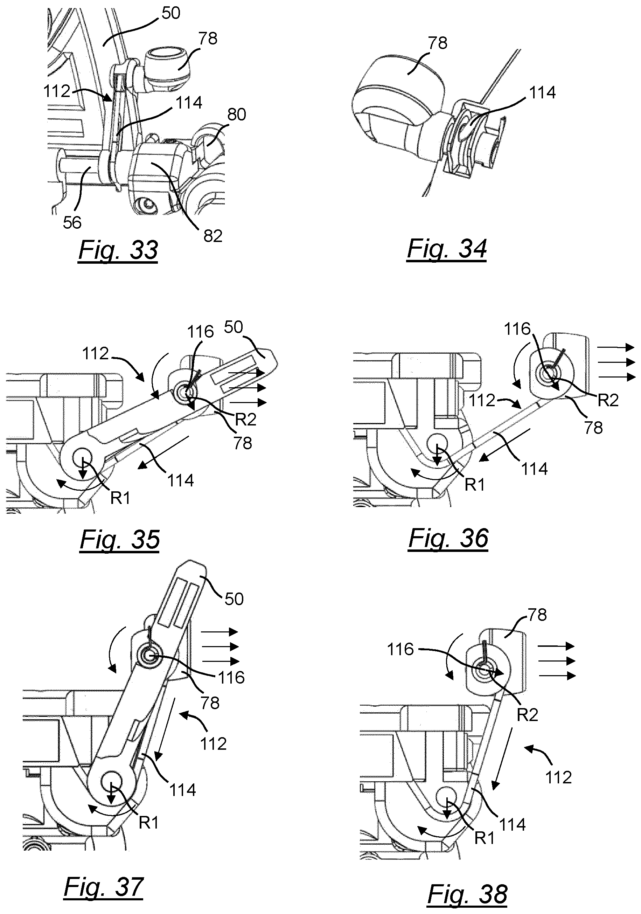

Figuren 33 bis 38 zeigen das Fahrzeug 10 im Bereich der Lenkgabel 50 mit daran angeordneter Frontleuchte 78, die mittels einer Ausrichtmechanik 112 derart ausgerichtet wird, dass die Frontleuchte 78 auch bei unterschiedlichen Kippwinkeln der Lenkgabel 50 stets in dieselbe, vorzugsweise horizontale, Richtung ausgerichtet bleibt. Die Ausrichtmechanik 112 ermöglicht, die Frontleuchte 78 oberhalb der Bodenplatte 12 anzubringen. Dies ist vorteilhaft, da eine höhere Anbringung der Frontleuchte 78 den Vorteil bietet, den Fahrweg besser auszuleuchten. Jedoch ist eine hohe Anordnung der Frontleuchte nur an einem kippbaren Teil des Fahrzeugs 10 möglich, da alle nicht kippbaren Teile des Fahrzeugs in Bodennähe angeordnet sind. Die Lenkgabel 50 bietet eine erhöhte Position.

Die Ausrichtmechanik 112 weist ein längliches flexibles Element 114, wie z.B. ein Kabel, einen Riemen, insbesondere Zahnriemen, oder einen Gurt, auf, der mit einem seiner beiden Enden an der Bodenplatte 12, insbesondere am vorderen Plattenelement 24, befestigt ist. Das längliche flexible Element 114 läuft mit einem ersten Radius R1 um eine Drehachse des Lenkgestänges 56, an welchem die Lenkgabel 50 schwenkbar angelenkt ist.

Die Frontleuchte 78 ist schwenkbar um eine Drehachse 116 an der Lenkgabel 50 angeordnet. Das längliche flexible Element 114 läuft mit einem zweiten Radius R2 um die Frontleuchte 78 und ist mit seinem zweiten Ende an der Frontleuchte 78 befestigt. Die Radien R1 und R2 sind gleich groß gewählt. Hierdurch bleibt die Ausrichtung der Frontleuchte 78 unabhängig von der Kippposition der Lenkgabel 50 erhalten. Zur Vereinfachung des Verständnisses ist in den Fig. 36 und 37 die Lenkgabel 50 nicht dargestellt.

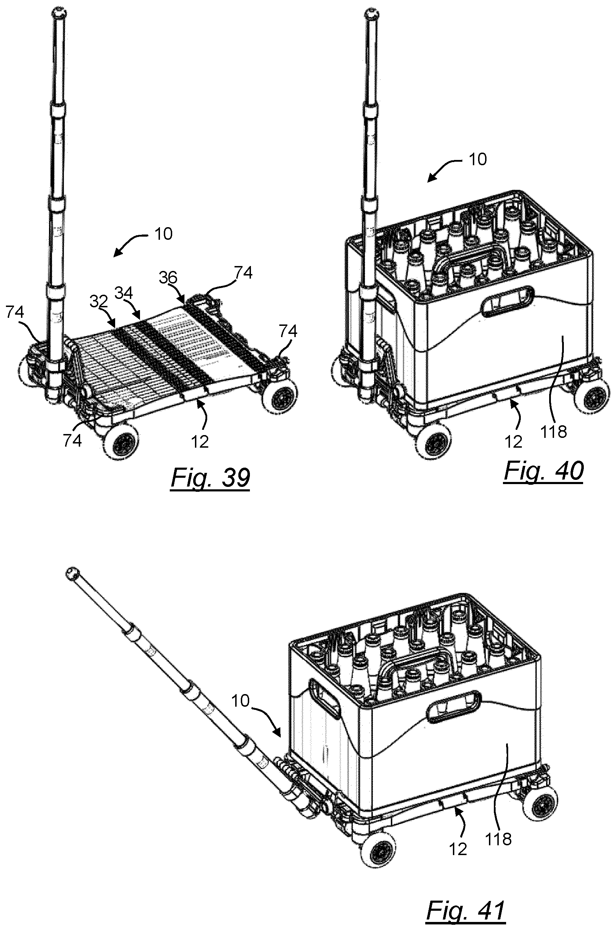

Figuren 39 bis 41 zeigen das Fahrzeug 10 zunächst unbeladen gemäß Fig. 39 und mit einem Getränkekasten 118 beladen gemäß den Figuren 40 und 41. Der Getränkekasten ruht auf der Bodenplatte 12. Da die Scharniere 32, 34, 36 derart ausgebildet sind, dass die Bodenplatte 12 in Richtung der Unterseite des Fahrzeugs 10 zusammengefaltet werden kann, stabilisiert die Last des Getränkekastens 118 die Bodenplatte 12 und sichert das Fahrzeug in seinem entfalteten Zustand. Der Getränkekasten wird mittels der Haltekanten 74 gegen Verrutschen gesichert. Die Haltekanten 74 sind dazu an allen vier Ecken der Bodenplatte 12 angeordnet und sind jeweils winkelig ausgebildet.

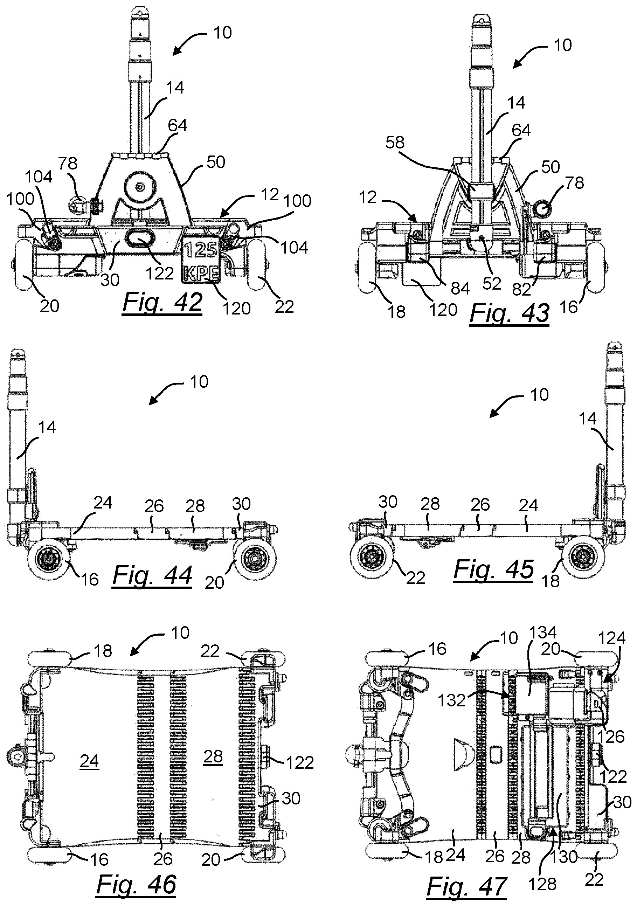

Figuren 42 bis 47 zeigen das Fahrzeug 10 in verschiedenen Ansichten: Fig. 42 zeigt das Fahrzeug in einer Seitenansicht von hinten. Fig. 43 zeigt das Fahrzeug in einer Seitenansicht von vorne. Fig. 44 zeigt das Fahrzeug in einer Seitenansicht von links. Fig. 45 zeigt das Fahrzeug in einer Seitenansicht von rechts. Fig. 46 zeigt das Fahrzeug 10 in einer Ansicht von oben und Fig. 47 in einer Ansicht von unten. Auf die vorstehenden Ausführungen wird verwiesen.

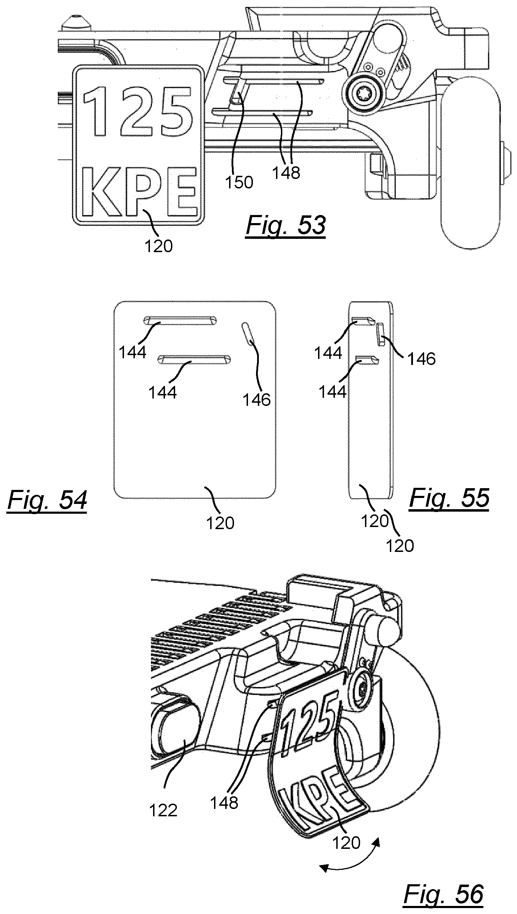

Das Fahrzeug 10 weist ferner einen Kennzeichenträger 120 auf, der am hinteren Plattenelement 30 befestigt ist. Er ist vorzugsweise ebenfalls im 3-D-Druckverfahren aus Kunststoff hergestellt. Der Kennzeichenträger 120 ist flexibel, so dass er bei Kollisionen mit etwaigen Hindernissen im Fahrweg nachgibt und nach einer derartigen Kollision wieder seine ebene Ausgangsform annimmt. Detaillierte Ausgestaltungen des Kennzeichenträgers 120 werden nachfolgend anhand von Figuren 53 bis 56 erläutert.

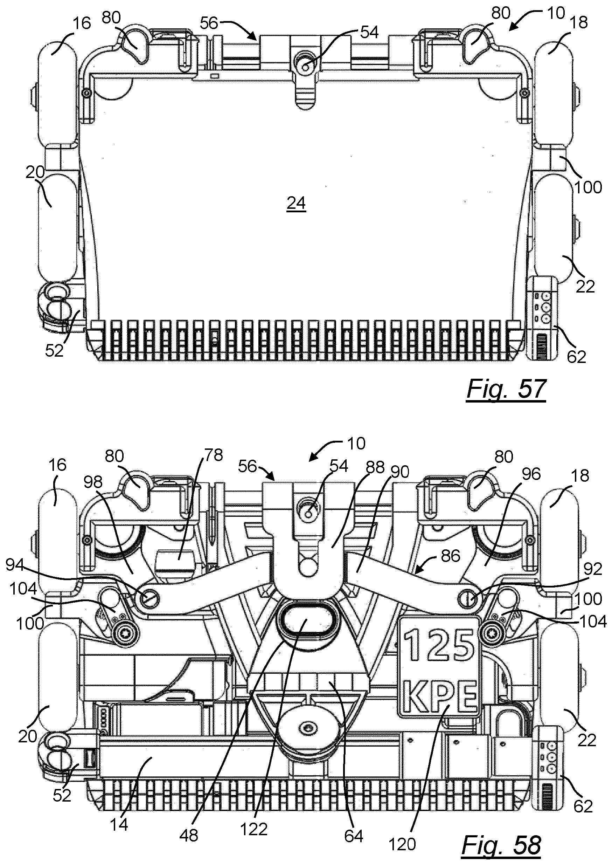

Zusätzlich zur Frontleuchte 78 weist das Fahrzeug 10 eine Rückleuchte 122 auf, die am hinteren Plattenelement 30 angeordnet ist. Vorteilhafterweise findet die Rückleuchte 122 im zusammengefalteten Zustand des Fahrzeugs 10 in der kreisrunden Öffnung 48 Platz, wie in Fig. 58 dargestellt.

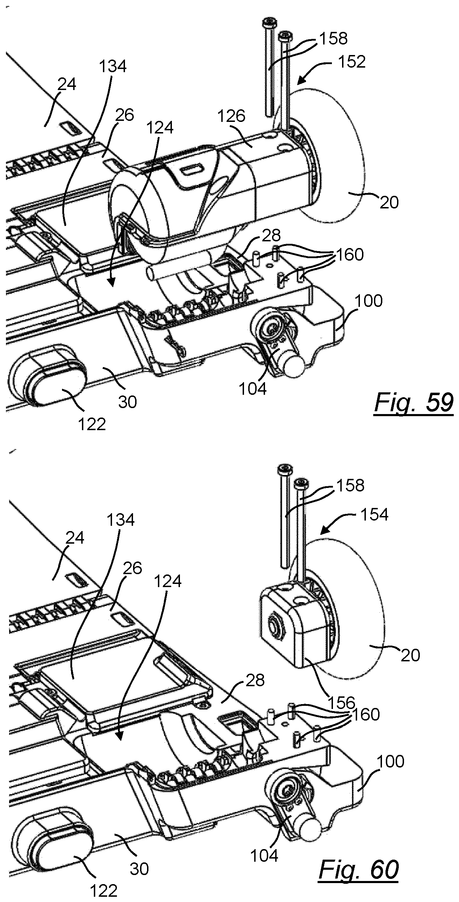

Auf der Unterseite der Bodenplatte 12, vorzugsweise am hinteren Plattenelement 30, ist eine erste Aufnahme 124 vorgesehen, die wahlweise eine Radaufhängung mit einem nicht-angetriebenen Rad gemäß Fig. 60 oder einem Elektromotor 126 mit einem vom Elektromotor 126 angetriebenen Rad 20 (wie in Fig. 47 und 59 dargestellt) montiert werden kann. An der Unterseite der Bodenplatte 12, vorzugsweise an dem dem hinteren Plattenelement 30 benachbarten Plattenelement 28, ist eine zweite Aufnahme 128 vorgesehen, in die ein Akkumulator 130 in Form einer wiederaufladbaren Batterie zur elektrischen Energieversorgung des Elektromotors 126 montiert ist. An der Unterseite der Bodenplatte 12, vorzugsweise an dem dem hinteren Plattenelement 30 benachbarten Plattenelement 28, ist eine dritte Aufnahme 132 vorgesehen, in die eine Steuereinheit 134 zur Steuerung des Elektromotors 126 montiert werden kann. Die Steuereinheit 134, der Akkumulator 130 und der Elektromotor 126 mit von ihm angetriebenen Rad 20 sind entnehmbar bzw. nachrüstbar. Das Fahrzeug 10 kann daher sowohl mit oder ohne elektrische Komponenten bereitgestellt werden. Sofern nicht der Elektromotor 126 mit von ihm angetriebenen Rad verbaut ist, befindet sich an dieser Stelle eine Radaufhängung mit einem nicht-angetriebenen Rad 20 gemäß Fig. 60.

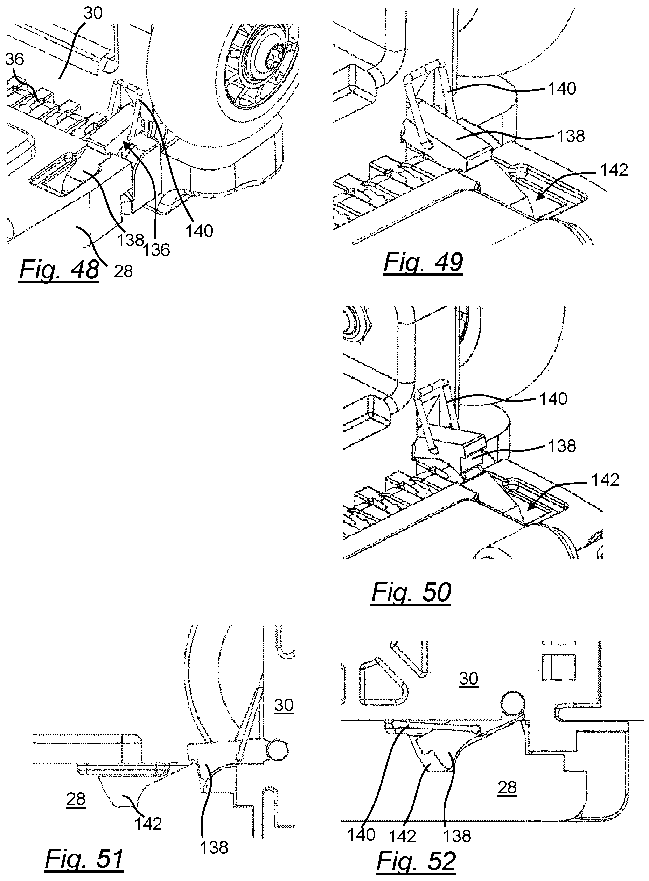

Figuren 48 bis 52 zeigen einen Ausschnitt der Bodenplatte 12 im Bereich des hinteren Plattenelements 30 und teilweise des benachbarten Plattenelements 28 sowie des Scharniers 36, welches diese beiden Plattenelemente 28, 30 gelenkig miteinander verbindet. Im Bereich des Scharniers 36 ist ein Mechanismus 136, der dazu dient, den entfalteten Zustand des Fahrzeugs 10 aufrechtzuerhalten. Dieser Mechanismus 136 verhindert, dass das hintere Plattenelement 30 unbeabsichtigt um das Scharnier 36 zusammenklappt, bspw. wenn das Fahrzeug 10 rückwärts gegen ein Hindernis rollt. Der Mechanismus 136 weist einen Hebel 138 auf, der von einem Federbügel 140 gegen das Plattenelement 28 gedrückt wird. Der Hebel 138 ist gelenkig mit dem hinteren Plattenelement 30 verbunden.

Die Figuren 48, 49 und 51 zeigen den sperrenden Zustand des Hebels 138, in dem ein Zusammenfalten der beiden Plattenelemente 28, 30 verhindert wird. Fig. 50 zeigt den Hebel 138 in angehobener Position, in welcher der sperrende Zustand aufgehoben ist. In dieser Position ist das Scharnier 36 frei beweglich und das hintere Plattenelement 30 kann mit dem Plattenelement 28 zusammengefaltet werden. Fig. 52 zeigt den zusammengefalteten Zustand der Plattenelemente 28 und 30. Im entfalteten Zustand des Fahrzeugs 10 rastet der Hebel 138 an einer Hinterkante der Bodenplatte 28 ein und verhindert ein unbeabsichtigtes Zusammenklappen. Zum Zusammenfalten des Fahrzeugs 10 wird der Hebel 138 angehoben. Im zusammengefalteten Zustand des Fahrzeugs 10 wird der Hebel 138 in einer dafür vorgesehenen Mulde 142 im Plattenelement 28 angeordnet. Vorteilhafterweise ist der Mechanismus 136 mehrfach vorhanden, bspw. doppelt auf der rechten Seite sowie auf der linken Seite der Bodenplatte 12.

Figuren 53 bis 56 zeigen den Kennzeichenträger 120 in detaillierterer Darstellung. Auf der Rückseite des Kennzeichenträgers 120 sind zwei parallel laufende Stege 144 sowie ein schräg zu diesen Stegen 144 verlaufender weiterer Steg 146 angeordnet. Die Stege 144 und 146 werden mit korrespondierend ausgebildeten Nuten, nämlich zwei parallel laufenden Nuten 148 sowie eine schräg zu diesen Nuten 148 verlaufende weitere Nut 150 im hinteren Plattenelement 30 in Eingriff gebracht. Dazu wird der Kennzeichenträger 120 mittels der Stege 144 seitlich in die Nuten 148 eingeschoben, bis der Steg 146 in der Nut 150 einrastet. Die Flexibilität des Kennzeichenträgers 120 unterstützt das Einrasten. Der Kennzeichenträger 120 ist dann formschlüssig mit dem hinteren Plattenelement 30 verbunden.

Fig. 56 veranschaulicht die Flexibilität und Biegsamkeit des Kennzeichenträgers 120. Die Herstellung des Kennzeichenträgers 120 aus Kunststoff im 3-D-Druckverfahren ermöglicht einen biegsamen Kennzeichenträger 120, der zugleich aber besonders formfest ist und auch nach einer Biegung wieder zuverlässig die ursprüngliche ebene Form einnimmt.

Fig. 57 zeigt das Fahrzeug 10 im zusammengefalteten Zustand entsprechend den Figuren 2 und 3, jedoch in einer Ansicht von oben auf das größte Plattenelement 24 der Bodenplatte 12. Fig. 58 entspricht der Darstellung gemäß Fig. 57, jedoch ohne das größte Plattenelement 24. Fig. 58 stellt somit einen Blick in das Innere des zusammengefalteten Fahrzeugs 10 bereit und veranschaulicht die Kompaktheit des Fahrzeugs 10 und die Lage der einzelnen Bauteile, wenn das Fahrzeug 10 sich im zusammengefalteten Zustand befindet. Auf die vorstehenden Ausführungen wird verwiesen.

Fig. 59 zeigt das Fahrzeug 10 mit demontierter Einheit 152 bestehend aus dem Elektromotor 126 und einem vom Elektromotor 126 angetriebenen hinteren Rad 20 nach Entnahme aus der ersten Aufnahme 124. Fig. 60 zeigt anstelle der Einheit 152 eine alternative Einheit 154 mit einer Radaufhängung 156 und einem nicht-angetriebenen Rad 20. Die Einheiten 152 und 154 sind durch Lösen von Schrauben 158 demontierbar und wieder montierbar. Haltestifte 160 können vorteilhafterweise vorgesehen sein, um die Einheiten 152 und 154 während der Montage und im montierten Zustand in Position zu halten. Das Fahrzeug 10 lässt sich durch modulare Elektrikelemente, wie der Einheit 152, der Steuereinheit 134, der Steuervorrichtung 62 sowie der Frontleuchte 78 und der Rückleuchte 122 aufrüsten. Zugleich ermöglicht die Konstruktion die Bereitstellung einer Basisversion des Fahrzeugs 10 ohne diese Elektrikelemente.

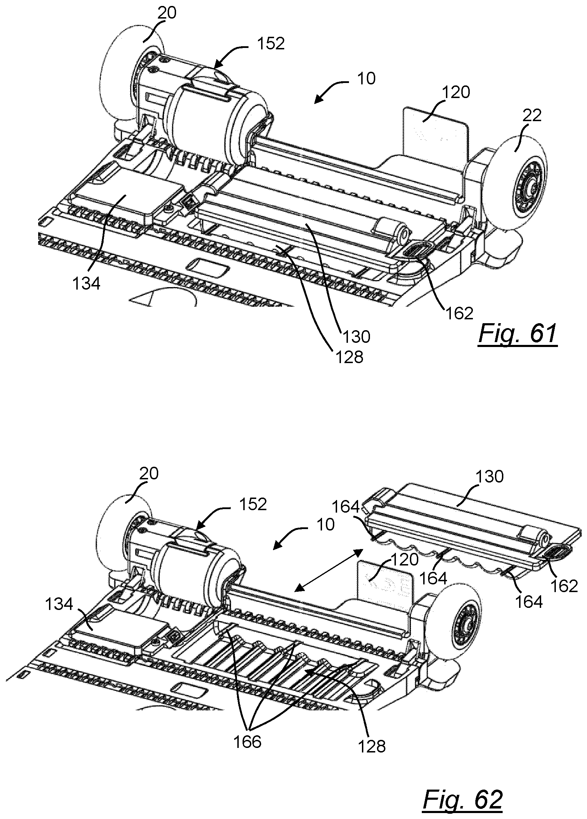

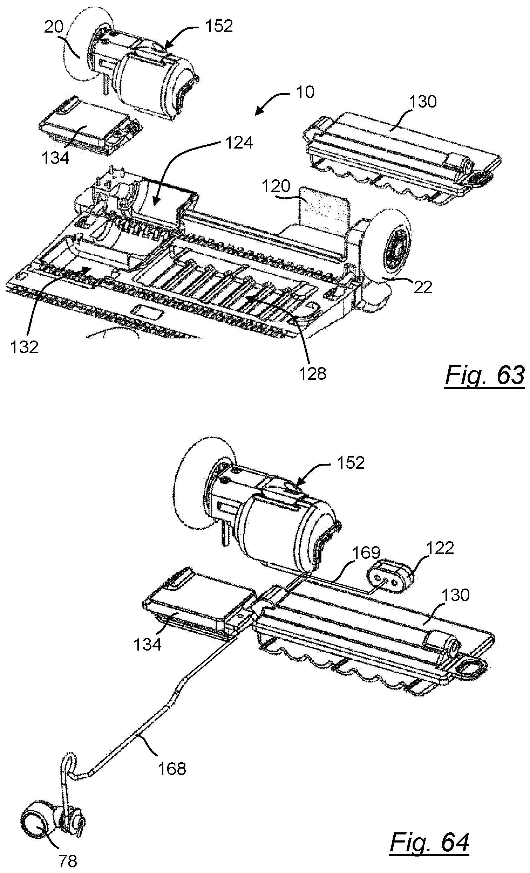

Fig. 61 zeigt das Fahrzeug 10 mit montierter Einheit 152 sowie Akkumulator 130 oberhalb seiner Aufnahme 128 und in der Aufnahme 132 montierter Steuereinheit 134. Fig. 62 zeigt den aus der Aufnahme 128 entnommenen Akkumulator 130, der durch Betätigen eines Riegels 162 seitlich schräg entnommen werden kann. Zu diesem Zweck sind Führungsstege 164 am Akkumulator 130 vorgesehen, die mit Führungsnuten 166 im Bereich der Aufnahme 128 zusammenwirken. Der Akkumulator 130 lässt sich auf diese Weise sehr leicht entnehmen und bei Bedarf gegen einen frisch geladenen Akkumulator tauschen. Fig. 63 zeigt das Fahrzeug 10 mit demontierter Einheit 152, entnommenem Akkumulator 130 und demontierter Steuereinheit 134. Fig. 64 zeigt die o.g. Elektrikelemente umfassend die Einheit 152, die Steuereinheit 134, die Steuervorrichtung 62 sowie die Frontleuchte 78 und die Rückleuchte 122, wobei zusätzlich Kabel 168, 169 zum elektrischen Verbinden der Elektrikelemente vorgesehen sind.

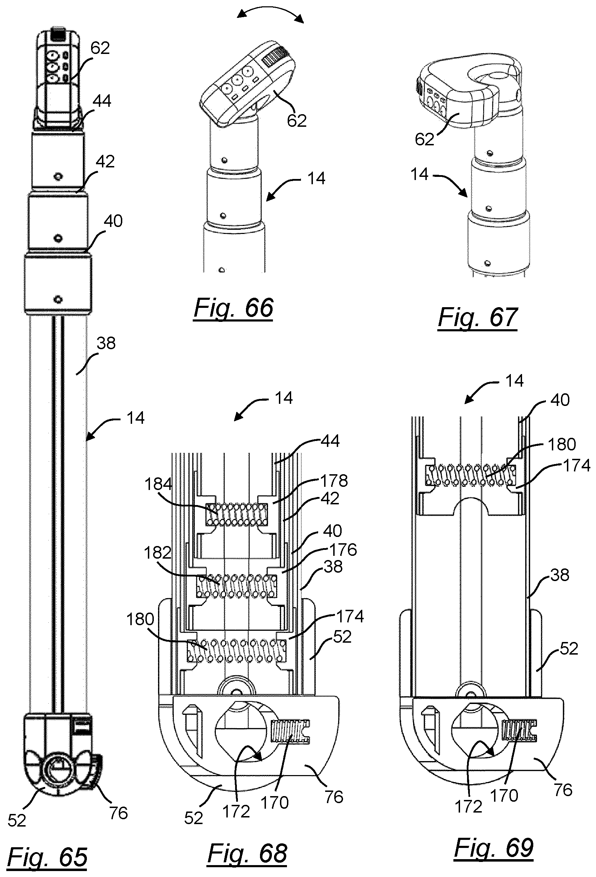

Figuren 65 bis 69 zeigen die Lenkstange 14 im Detail. In Fig. 65 ist die Steuervorrichtung 62 am oberen Ende der Lenkstange 14 in gerader Position angebracht. Fig. 66 zeigt die seitliche Verschwenkbarkeit der Steuervorrichtung 62, wobei Fig. 67 die um 90° zur Seite verschwenkte maximale Schwenkposition nach links zeigt. In entsprechender Weise ist die Steuervorrichtung 62 um 90° in eine maximale Schwenkposition nach rechts verschwenkbar. Der Verschluss 52 am unteren Ende der Lenkstange 14 ist in den Figuren 65, 68 und 69 gezeigt. Mittels des Knopfes 76, der radial verschiebbar in dem Verschluss 52 und gegen eine Feder 170 vorgespannt angeordnet ist, kann der Verschluss 52 vom Zapfen 54 gelöst werden, indem der Knopf 76 gegen die Feder 170 gedrückt wird. Hierdurch verschiebt sich die Öffnung 172 derart, dass der Zapfen 54 freigegeben wird. Fig. 68 zeigt die Lenkstange 14 mit teleskopmäßig ineinandergeschobenen Einzelelementen 38, 40, 42 und 44. Die Einzelelemente 40, 42, 44 weisen jeweils einen Gleitkörper 174, 176, 178 auf, der durch jeweils eine Feder 180, 182, 184 auseinander gedrückt wird. Der Gleitkörper 174, 176, 178 samt zugehöriger Feder 180, 182, 184 sorgen dafür, dass die Einzelelemente 38, 40, 42, 44 jeweils in ihrer Position verbleiben. D.h., sind die Einzelelemente 38, 40, 42, 44 auseinandergezogen, verbleiben sie auseinandergezogen. Ebenso verbleiben die Einzelelemente 38, 40, 42, 44 in einer ineinander geschobenen Position, sofern keine äußeren Kräfte aufgebracht werden.

Die Federn 180, 182 und 184 können baugleich ausgeführt sein. Aufgrund der unterschiedlichen Durchmesser der Einzelelemente 38, 40, 42, 44 sind die Federn 180, 182 und 184 mit unterschiedlicher Vorspannung beaufschlagt. Das innerste Einzelelement 44 weist daher den Gleitkörper 178 mit der größten Vorspannung in seiner Feder 184 auf. Demgegenüber ist die Vorspannung der Feder 182 des Einzelelements 42 geringer als die Vorspannung der Feder 184. Die Vorspannung der Feder 180 des Einzelelements 40 ist noch geringer als die Vorspannung der Feder 182 sowie der Feder 184. Die unterschiedlichen Vorspannungen der Federn 180, 182 und 184 führen dazu, dass zunächst die Einzelelemente 38, 40 mit den größeren Durchmessern auseinandergezogen werden. Sobald das Einzelelement 40 vollständig bis zu seinem Anschlag aus dem Einzelelement 38 herausgezogen ist, wird das Einzelelement 42 aus dem Einzelelement 40 herausgezogen. Sobald das Einzelelement 42 vollständig bis zu seinem Anschlag aus dem Einzelelement 40 herausgezogen ist, wird das Einzelelement 44 aus dem Einzelelement 42 herausgezogen. Diese Reihenfolge wird bestimmt durch die unterschiedlichen Vorspannungen der Federn 180, 182 und 184. Diese Ausbildung ist vorteilhaft, da dadurch gewährleistet ist, dass primär die Einzelelemente mit größerem Durchmesser zur Wirkung gelangen, die stabiler sind als die Einzelelemente mit geringerem Durchmesser. Beim Zusammenschieben werden zunächst die Einzelelemente mit den größten Durchmessern zusammengeschoben. Dies kann vorteilhaft dazu genutzt werden, bei Bedarf die Einzelelemente mit geringerem Durchmesser zur Wirkung gelangen zu lassen.

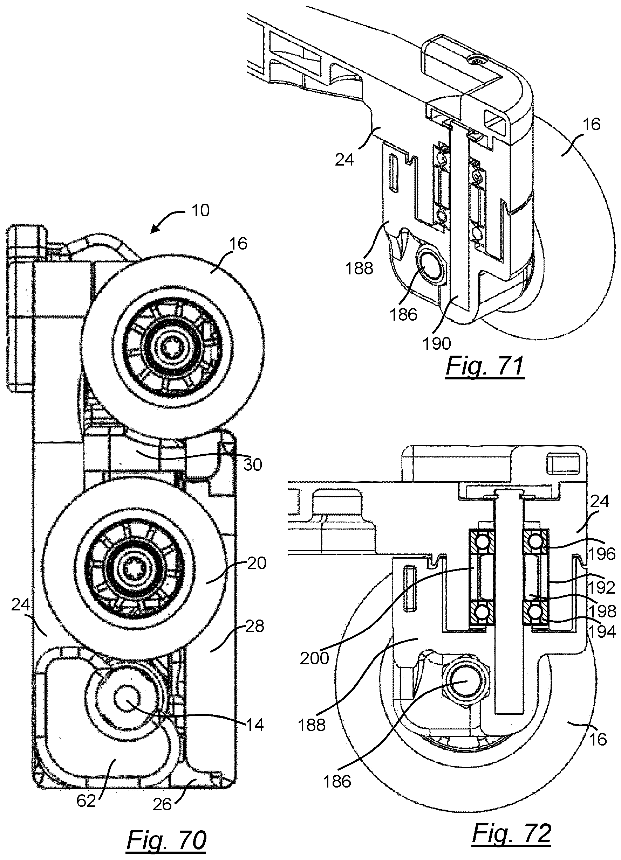

Fig. 70 veranschaulicht das Fahrzeug 10 in zusammengefaltetem Zustand, wobei die Steuervorrichtung 62 am oberen Ende der Lenkstange 14 seitlich eingeklappt ist. Figuren 71 und 72 zeigen das vordere lenkbare Rad 16 in einer Schnittdarstellung. Eine Drehachse 186 des Rades 16 ist in einem Lagerteil 188 drehbar um eine Drehachse 190 gelagert, die in dem Plattenelement 24 angeordnet ist. Eine Lagerkammer 192 im Plattenelement 24 nimmt zwei Kugellager 194, 196 mit jeweils innerem und äußerem Lagerring auf. Die beiden inneren Lagerringe sind mit einer inneren Distanzhülse 198 und die beiden äußeren Lagerringe mit einer äußeren Distanzhülse 200 verbunden, so dass sich die Gewichtskraft des Fahrzeugs 10, ggf. samt Ladung, auf beide Kugellager 194, 196 gleichmäßig verteilen kann.

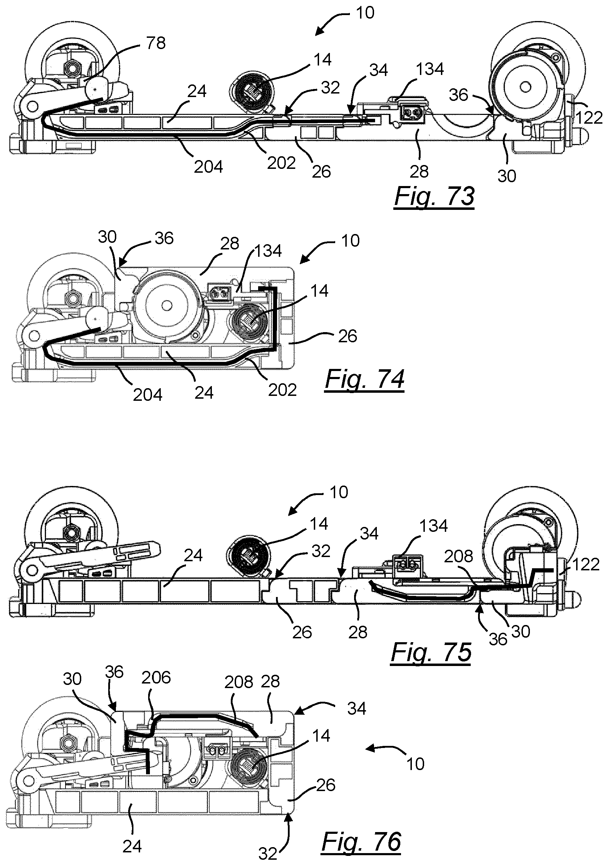

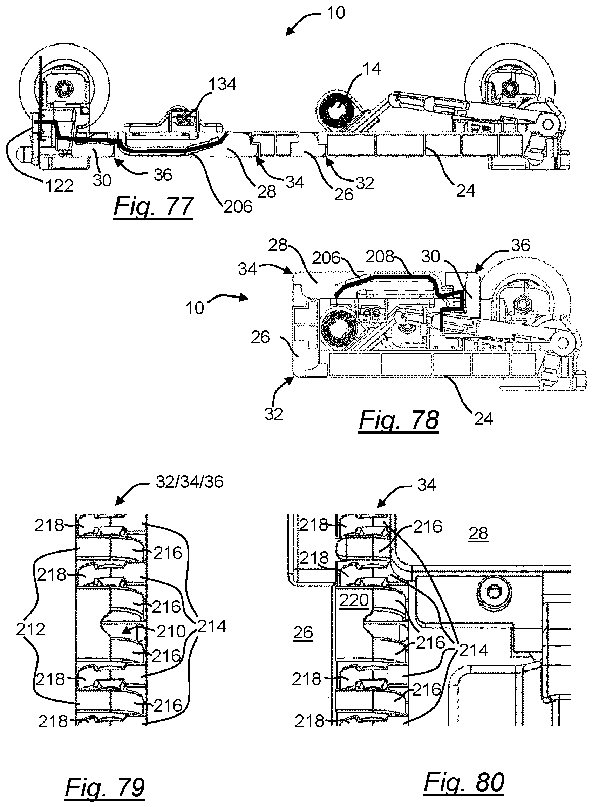

Figuren 73 und 74 zeigen einen Kabelkanal 202, der durch die Plattenelemente 24, 26 und 28 und die Scharniere 32 und 34 hinweg verläuft und ein Kabel 204 von der Steuereinheit 134 zur Frontleuchte 78 führt. Figuren 75 und 76 zeigen einen weiteren Kabelkanal 206, der durch die Plattenelemente 28 und 30 und das Scharnier 36 hinweg verläuft und ein Kabel 208 von der Steuereinheit 134 zur Rückleuchte 122 führt. Figuren 77 und 78 zeigen den in den Figuren 75 und 76 gezeigten weiteren Kabelkanal 206 in umgekehrter Blickrichtung.

Fig. 79 zeigt einen Ausschnitt entlang eines der Scharniere 32, 34, 36 zwischen zwei Plattenelementen 24, 26, 28, 30 mit einer Kabeldurchführung 210 durch das Scharnier 32, 34, 36 in einer Ansicht von unten auf die Bodenplatte 12. Fig. 80 zeigt einen solchen Ausschnitt beispielhaft am Scharnier 34 zwischen den Plattenelementen 26 und 28. Ein solches Scharnier 32, 34, 36 besteht aus einem ersten Scharnierteil 212 an einem der beiden an das Scharnier angrenzenden Plattenelemente, z.B. am Plattenelement 26, und aus einem zweiten Scharnierteil 214 an dem anderen an das Scharnier angrenzenden Plattenelement, z.B. am Plattenelement 28. Jedes der Scharnierteile besteht aus einer Reihe von Auslegerstegen. Das erste Scharnierteil 212 weist eine Reihe von parallel zueinander liegenden Auslegerstegen 216 und das zweite Scharnierteil 214 eine Reihe von parallel zueinander liegenden Auslegerstegen 218 auf. Im Bereich der Kabeldurchführung 210 ist ein solcher Auslegersteg 218 an einem der beiden Scharnierteile 214 durch ein Loch ersetzt, welches in das Innere des angrenzenden Plattenelements 28 führt. An dem anderen der beiden Scharnierteile 212 ist eine Zwischenraumabdeckung 220 vorgesehen. Sie trägt dazu bei, das entlang der Kabeldurchführung 210 durchgeführte Kabel (in Fig. 79 und 80 nicht dargestellt) zu schützen.

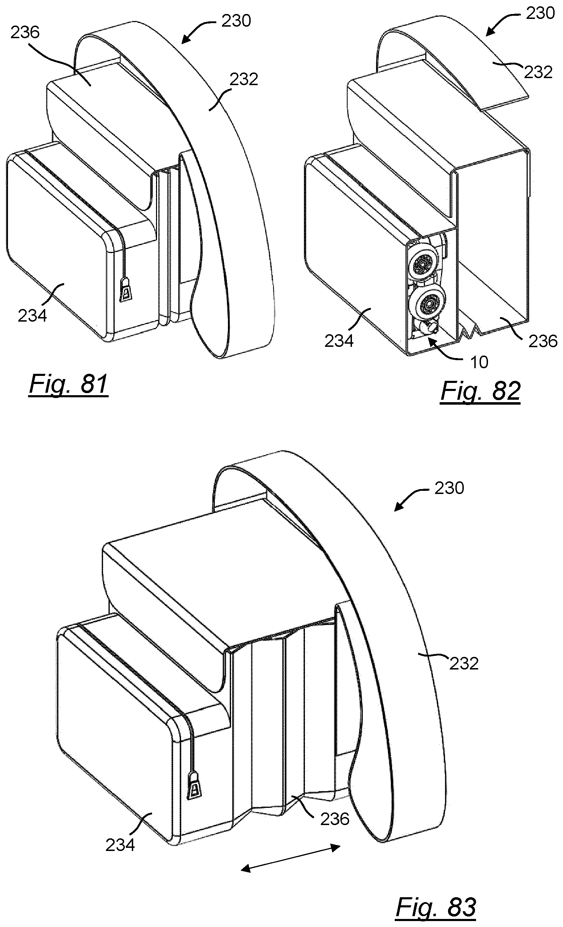

Figuren 81 bis 83 zeigen eine ausfaltbare Tasche 230 mit einem Trageriemen 232, der zum Umhängen der Tasche 230 dient. Die Tasche 230 umfasst eine Seitentasche 234 zur Aufnahme des Fahrzeugs 10 im zusammengefalteten Zustand, wie in Fig. 82 dargestellt. Die Abmessungen der Seitentasche 234 sind an die Abmessungen des Fahrzeugs 10 im zusammengefalteten Zustand angepasst. Die Tasche 230 umfasst ferner eine Haupttasche 236 zur Aufnahme von Waren aller Art, bspw. von eingekauften Waren. Die Haupttasche 236 ist vorzugsweise ausfaltbar, um ihr Volumen variieren zu können.

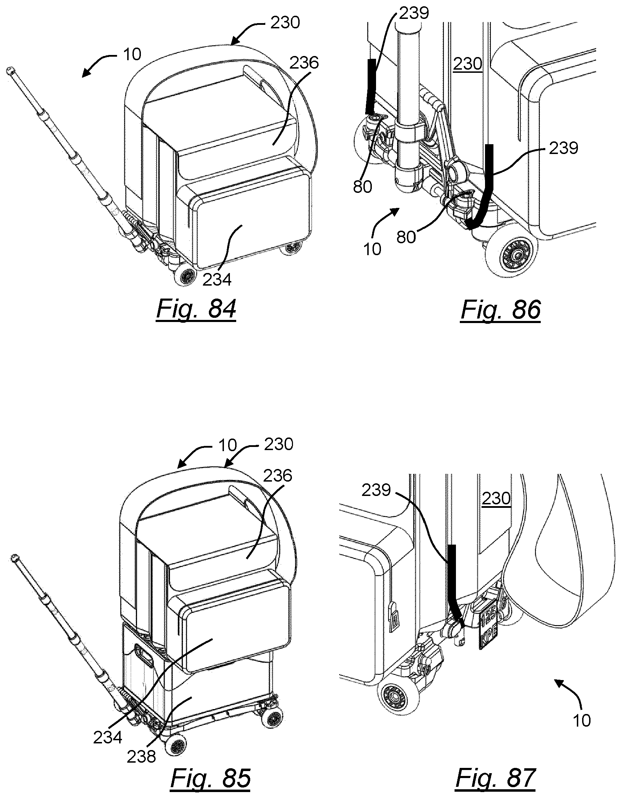

Fig. 84 zeigt die Tasche 230 im ausgefalteten Zustand der Haupttasche 236. Die Bodenfläche der Haupttasche 236 im ausgefalteten Zustand ist an die Fläche der Bodenplatte 12 des Fahrzeugs 10 angepasst, so dass die Tasche 230 sicher auf der Bodenplatte 12 abgestellt werden kann. Aufgrund der Anpassung der Bodenfläche der Haupttasche 236 an die Fläche der Bodenplatte 12 wird die Tasche 230 sicher von den Haltekanten 74 an den Ecken der Bodenplatte 12 gehalten. Ein Verrutschen oder Wegrutschen der Tasche 230 über die Kanten der Bodenplatte 12 hinweg wird somit verhindert. Die Seitentasche 234 ist derart ausgebildet, dass sie über die Fläche der Bodenplatte 12 hinausragt. Dies ermöglicht die Bereitstellung eines größeren Volumens der Tasche 230. Aufgrund der Anpassung der Bodenfläche der Haupttasche 236 im ausgefalteten Zustand an die Fläche der Bodenplatte 12 des Fahrzeugs 10 und der Anpassung der Fläche der Bodenplatte 12 an die Bodenfläche eines handelsüblichen Getränkekastens 238 ist zugleich auch die Bodenfläche der Haupttasche 236 an die Bodenfläche eines handelsüblichen Getränkekastens 238 angepasst, wie in Fig. 85 dargestellt.

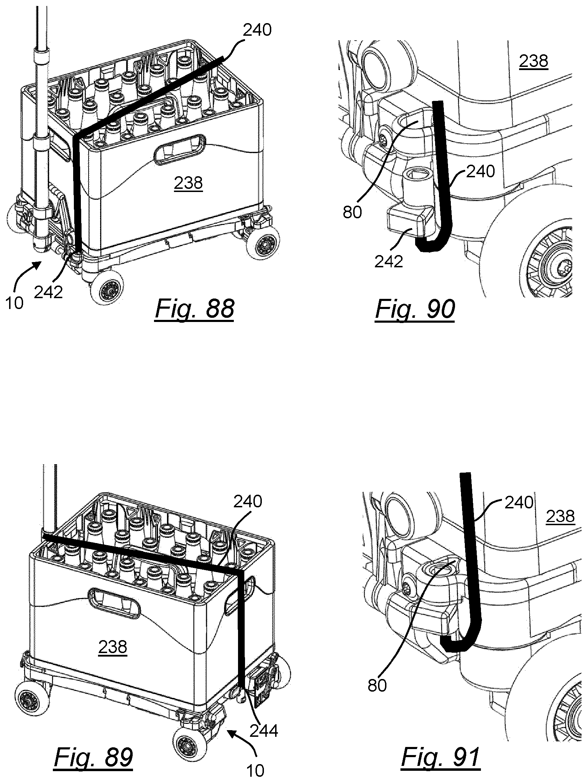

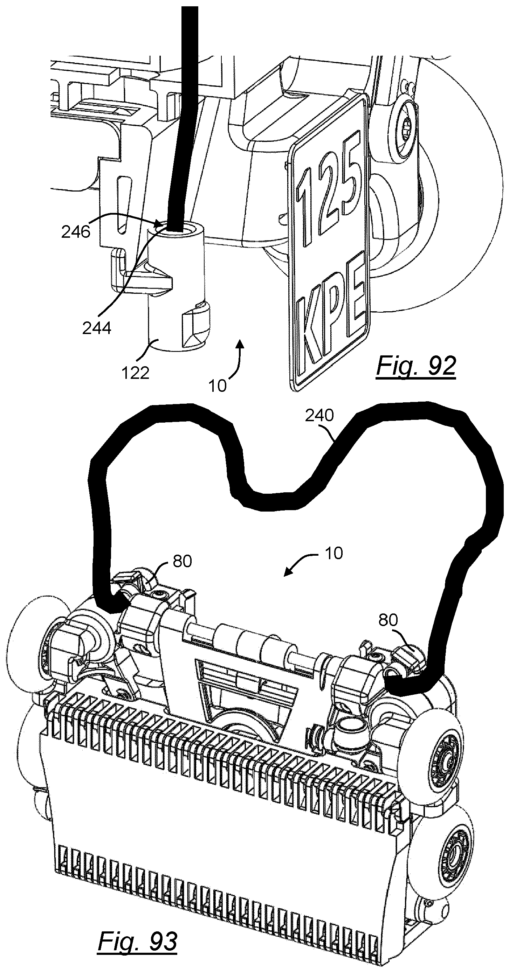

Figuren 86 und 87 zeigen an den Hängelaschen 80 montierte Taschen-Gurte 239. Diese Taschen-Gurte 239 sind mit der Tasche 230 vernäht oder auf andere Weise, z.B. durch Verschweißen oder Verkleben, fest verbunden. Figuren 88 bis 93 zeigen einen Gurt 240 mit variabler Länge, der wahlweise als Umhängegurt zum Tragen des Fahrzeugs 10 im zusammengefalteten Zustand oder als Spanngurt zum Fixieren von Lasten auf der Bodenplatte 12 des Fahrzeugs 10 im entfalteten Zustand verwendet werden kann. Die Figuren 86 bis 92 zeigen die Verwendung des Gurtes 240 als Spanngurt zum Fixieren von Lasten. Im Einzelnen zeigen die Figuren 86 und 87 die Fixierung der Tasche 230 mittels des Gurtes 239. Die Figuren 88 bis 92 zeigen die Fixierung eines Getränkekastens 238 mittels des Gurtes 240. Fig. 93 zeigt die Anbringung des Gurtes 240 in den Hängelaschen 80 für eine Verwendung des Gurtes 240 als Tragegurt. Bei einer Verwendung des Gurtes 240 als Spanngurt wird jeweils ein Endstück 242, 244 des Gurtes 240 in eine Hängelasche 80 am vorderen Plattenelement 24 und eine Hängelasche 246 im Bereich des hinteren Plattenelements 30, bspw. im Bereich der Rückleuchte 122, befestigt.

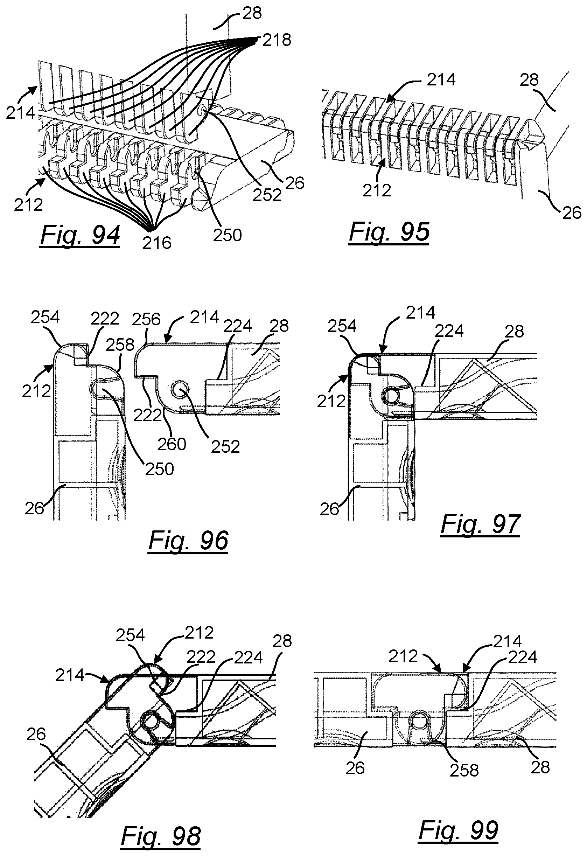

Figuren 94 bis 99 zeigen ein Scharnier, beispielhaft das Scharnier 34, in detaillierterer Darstellung. Die Scharniere 32 und 36 sind vorteilhafterweise analog ausgebildet. Das Scharnier 34 umfasst das erste Scharnierteil 212 sowie das zweite Scharnierteil 214. Das erste Scharnierteil 212 weist eine Reihe von parallel zueinander angeordneten ersten Auslegerstegen 216 auf. Das zweite Scharnierteil 214 weist eine Reihe von parallel zueinander angeordneten zweiten Auslegerstegen 218 auf. Zwischen zwei benachbarten Auslegerstegen 216 oder 218 eines Scharnierteils 212, 214 ist jeweils ein Zwischenraum gebildet, in den ein Auslegersteg 218 oder 216 des anderen Scharnierteils 214, 212 eingreift. Die Scharnierteile 212, 214 sind derart ausgebildet, dass sie zusammengesteckt werden können und dennoch zuverlässig zusammenhalten, wenn sich das Fahrzeug 10 im entfalteten Zustand, aber auch im zusammengefalteten Zustand befindet.

Jeder der Auslegerstege 216, 218 verringert seine Höhe zu seinem Endabschnitt hin. Vorzugsweise ist dabei die Höhe jedes der Auslegerstege 216, 218 im Endabschnitt nur etwa halb so groß wie in dem dem Endabschnitt benachbarten Hauptabschnitt. Diese Endabschnitte weisen jeweils eine im entfalteten und betriebsbereiten Zustand des Fahrzeugs 10 nach unten gerichtete, vorzugsweise horizontale, Auflagefläche 222 auf. Jeder der Zwischenräume zwischen zwei benachbarten Auslegerstegen 216 bzw. 218 weist in einem Anfangsabschnitt eine Stufe 224 auf. Vorzugsweise ist die Höhe der Stufe 224 wiederum nur halb so groß wie die Höhe der Auslegerstege 216 bzw. 218. Im entfalteten Zustand des Fahrzeugs 10 liegen die nach unten gerichteten Auflageflächen 222 der Endabschnitte der Auslegerstege 216, 218 auf den nach oben gerichteten Auflageflächen der Stufen 224.

In einem mittleren Abschnitt der Auslegerstege 216 des einen Scharnierteils, z.B. des ersten Scharnierteils 212, sind Drehachsenlager 250 vorgesehen, während in den Auslegerstegen 218 des anderen Scharnierteils, z.B. des zweiten Scharnierteils 214, Drehachsen 252 vorgesehen sind. Die Drehachsen 252 des einen Scharnierteils 214 lagern in den Drehachsenlagern 250 des anderen Scharnierteils 212.

Die Auslegerstege 216, 218 sind derart in Länge, Breite und mit Abrundungen 254, 256, 258, 260 ausgebildet, dass ein menschlicher Finger nicht zwischen den Auslegerstegen 216, 218 eingeklemmt werden kann. Vorzugsweise weist jeder der Auslegerstege 216, 218 an seinem Endabschnitt eine nach oben gerichtete Abrundung 254, 256 und an dem diesem Endabschnitt benachbarten Hauptabschnitt eine nach unten gerichtete Abrundung 258, 260 auf.

Insgesamt stellt die Erfindung ein vielseitig einsetzbares Fahrzeug bereit, dass insbesondere zum Einkaufen auch größerer Einkäufe nutzbar ist, ohne dass dazu der Nutzer einen herkömmlichen PKW benötigen würde. Mittels des Fahrzeugs kann der Nutzer entweder zu seiner Einkaufsstätte fahren oder das Fahrzeug dorthin tragen - entweder in einer Tasche oder an einem Gurt umgehängt - oder nach Art eines Handwagens hinter sich her ziehen. Nach Erledigung des Einkaufs können die eingekauften Waren, einschließlich Getränkekästen auf das Fahrzeug aufgeladen und das Fahrzeug nach Hause gezogen oder gefahren werden.

Das Fahrzeug lässt sich aufgrund seiner Konstruktion zu einem geringen Packmaß zusammenfalten. Aufgrund der Herstellung im 3-D-Druckverfahren aus Kunststoff ist das Fahrzeug leicht und daher transportierbar. Das Fahrzeug eignet sich daher insbesondere in Wohngebieten, in denen herkömmliche PKW nicht gewünscht oder nicht erlaubt sind, aber auch für den umweltbewussten Menschen.

In den Figuren werden folgende Bezugsziffern verwendet:

| | | | |
|---|---|---|---|
| 10 | faltbares Fahrzeug | 48 | kreisrunde Öffnung |
| 12 | Bodenplatte | 50 | Lenkgabel |
| 14 | Lenkstange | 52 | Verschluss |
| 16 | Rad (vorne links) | 54 | Zapfen |
| 18 | Rad (vorne rechts) | 56 | Lenkgestänge |
| 20 | Rad (hinten links) | 58 | Haltering |
| 22 | Rad (hinten rechts) | 60 | Aufnahme |
| 24 | Plattenelement | 62 | Steuervorrichtung |
| 26 | Plattenelement | 64 | Scharnier |
| 28 | Plattenelement | 66 | 1. Teil der Lenkgabel |
| 30 | Plattenelement | 68 | 2. Teil der Lenkgabel |
| 32 | Scharnier | 70 | Klemmelement |
| 34 | Scharnier | 72 | Klemmnase |
| 36 | Scharnier | 74 | Haltekanten |
| 38 | Einzelelement der Teleskopstange | 76 | Knopf |
| 40 | Einzelelement der Teleskopstange | 78 | Frontleuchte |
| 42 | Einzelelement der Teleskopstange | 80 | Hängelasche |
| 44 | Einzelelement der Teleskopstange | 82 | Prallschutz |
| 46 | Lenkachse | 84 | Prallschutz |
| 86 | Lenkmechanismus | 158 | Schrauben |
| 88 | axial verschiebbares Element | 160 | Haltestifte |
| 90 | Lenkorgan | 162 | Regel |
| 92 | Gelenk | 164 | Führungssteg |
| 94 | Gelenk | 166 | Führungsnut |
| 96 | Lenkarm | 168 | Kabel |
| 98 | Lenkarm | 169 | Kabel |
| 100 | Bremse | 170 | Feder |
| 102 | Anlagefläche | 172 | Öffnung |
| 104 | Umschalthebel | 174 | Gleitkörper |
| 106 | Feder | 176 | Gleitkörper |
| 108 | Druckelement | 178 | Gleitkörper |
| 110 | Aufnahme | 180 | Feder |
| 112 | Ausrichtmechanik | 182 | Feder |
| 114 | längliches flexibles Element | 184 | Feder |
| 116 | Drehachse | 186 | Drehachse |
| 118 | Getränkekasten | 188 | Lagerteil |
| 120 | Kennzeichenträger | 190 | Drehachse |
| 122 | Rückleuchte | 192 | Lagerkammer |
| 124 | 1. Aufnahme für Radaufhängung und Elektromotor | 194 | Kugellager |
| | | 196 | Kugellager |
| 126 | Elektromotor | 198 | innere Distanzhülse |
| 128 | 2. Aufnahme für Akkumulator | 200 | äußere Distanzhülse |
| 130 | Akkumulator | 202 | Kabelkanal |
| 132 | 3. Aufnahme für Steuereinheit | 204 | Kabel |
| 134 | Steuereinheit | 206 | Kabelkanal |
| 136 | Mechanismus | 208 | Kabel |
| 138 | Hebel | 210 | Kabeldurchführung |
| 140 | Federbügel | 212 | 1. Scharnierteil |
| 142 | Mulde | 214 | 2. Scharnierteil |
| 144 | Stege | 216 | Auslegerstege des 1. Scharnierteils |
| 146 | Steg | 218 | Auslegerstege des 2. Scharnierteils |
| 148 | Nuten | 220 | Zwischenraumabdeckung |
| 150 | Nut | 222 | Auflagefläche |
| 152 | Einheit aus Elektromotor und angetriebenem Rad | 224 | Stufe |
| | | 230 | Tasche |
| 154 | Einheit aus Radaufhängung und nichtangetriebenem Rad | 232 | Trageriemen |
| | | 234 | Seitentasche |
| 156 | Radaufhängung | 236 | Haupttasche |
| 238 | Getränkekasten | 252 | Drehachsen |
| 239 | Taschen-Gurt | 254 | Abrundung |
| 240 | Gurt | 256 | Abrundung |
| 242 | Endstück des Gurts | 258 | Abrundung |
| 244 | Endstück des Gurts | 260 | Abrundung |
| 246 | Hängelasche | R1 | erster Radius |
| 250 | Drehachsenlager | R2 | zweiter Radius |

## Patentansprüche

1. Zusammenfaltbares Fahrzeug, das einen zusammengefalteten Zustand einnehmen kann, in dem das Fahrzeug (10) nicht nutzbar und in einer Tasche (230) verstaubar ist, und einen entfalteten Zustand einnehmen kann, in dem das Fahrzeug (10) wahlweise als Roller zum Transport einer Person oder als Handwagen zum Transport von Waren nutzbar ist,
wobei das Fahrzeug (10) eine Bodenplatte (12), eine Lenkstange (14) und vier Räder (16, 18, 20, 22) aufweist, wobei im entfalteten Zustand die Bodenplatte (12) eine durchgängige ebene Fläche bildet,
wobei die Bodenplatte (12) in mindestens drei Plattenelemente (24, 26, 28, 30) geteilt ist, die durch mindestens zwei quer zur Fahrtrichtung angeordnete Scharniere (32, 34, 36) verbunden sind, mittels denen die Bodenplatte (12) in Richtung der Unterseite des Fahrzeugs (10) zusammenfaltbar ist,
wobei alle Räder (16, 18, 20, 22) an den äußeren Plattenelementen (24, 30), nämlich zwei Räder (16, 18) an einem vorderen Plattenelement (24) und zwei Räder (20, 22) an einem hinteren Plattenelement (30), angeordnet sind,
wobei die Lenkstange (14) eine Teleskopstange ist, die im zusammengefalteten Zustand ohne Demontage der Teleskopstange zwischen den Plattenelementen (24, 26, 28, 30) verstaubar ist,
wobei die Lenkstange (14) nach vorne in verschiedene Kipppositionen gekippt und nach hinten aufgerichtet werden kann,
wobei die Lenkstange (14) mit einer Lenkachse (46) verbunden ist, über die durch seitliches Schwenken der Lenkstange (14) um die Lenkachse (46) die Räder (16, 18) am vorderen Plattenelement (24) in jeder Kippposition der Lenkstange (14) gelenkt werden können,
wobei in einer nach vorne gekippten Kippposition der Lenkstange (14) sich das Fahrzeug (10) an der Lenkstange (14) ziehen lässt.

2. Fahrzeug nach Anspruch 1, **dadurch gekennzeichnet, dass** die Scharniere (32, 34, 36) der Bodenplatte (12) Auslegerstege (216, 218) aufweisen und derart ausgebildet sind, dass sich die Auslegerstege (216, 218) gegenseitig ineinander verschränken und stabilisieren.

3. Fahrzeug nach Anspruch 2, **dadurch gekennzeichnet, dass** die Auslegerstege (216, 218) derart in Länge, Breite und mit Abrundungen (254, 256, 258, 260) ausgebildet sind, dass ein menschlicher Finger nicht zwischen den Auslegerstegen (216, 218) eingeklemmt werden kann.

4. Fahrzeug nach einem der vorhergehenden Ansprüche, **dadurch gekennzeichnet, dass** die Lenkstange (14) stufenlos verstellbar ist und/oder mit definierter Kraft auseinandergezogen und zusammengeschoben werden kann.

5. Fahrzeug nach einem der vorhergehenden Ansprüche, **dadurch gekennzeichnet, dass** am oberen Ende der Lenkstange (14) eine Aufnahme (60) vorgesehen ist, von der Zusatzmodule, bspw. eine Steuervorrichtung (62) zur Geschwindigkeitssteuerung eines Elektromotors (126) zum Antreiben des Fahrzeugs (10) und/oder eine Anhängerkupplung, aufnehmbar sind.

6. Fahrzeug nach einem der vorhergehenden Ansprüche, **dadurch gekennzeichnet, dass** an der Bodenplatte (12), bspw. deren hinteren Plattenelement (30), eine erste Aufnahme (124) vorgesehen ist, in die wahlweise eine Einheit (154), die eine Radaufhängung und ein nicht-angetriebenes Rad (20) aufweist, oder eine Einheit (152), die einen Elektromotor (126) und ein vom Elektromotor (126) angetriebenes Rad (20) aufweist, austauschbar montiert ist und/oder
an der Unterseite der Bodenplatte (12), bspw. an dem dem hinteren Plattenelement (30) benachbarten Plattenelement (28), eine zweite derart ausgebildete Aufnahme (128) vorgesehen ist, dass in sie ein Akkumulator (130) zur elektrischen Energieversorgung des Elektromotors (126) austauschbar montiert werden kann, und/oder
an der Unterseite der Bodenplatte (12), bspw. an dem dem hinteren Plattenelement (30) benachbarten Plattenelement (28), eine dritte derart ausgebildete Aufnahme (132) vorgesehen ist, dass in sie eine Steuereinheit (134) zur Steuerung des Elektromotors (126) austauschbar montiert werden kann.

7. Fahrzeug nach einem der vorhergehenden Ansprüche, **gekennzeichnet durch** zwei voneinander unabhängige fußbetätigbare Bremsen (100), wobei bei einer Fußbetätigung die Bremse (100) auf ein der Bremse zugeordnetes Rad (20, 22) drückt, wobei eine Feder (106) die Bremse (100) bei Ausbleiben einer Fußbetätigung aufdrückt, wobei die Bremse (100) über einen Umschalthebel (104) zur Bereitstellung einer Feststellbremse auf das Rad (20, 22) drückend fixiert werden kann.

8. Fahrzeug nach Anspruch 7, **dadurch gekennzeichnet, dass** die Feder (106) im zusammengefalteten Zustand des Fahrzeugs (10) einen Verschlussmechanismus bereitstellt, der den zusammengefalteten Zustand aufrechterhält.

9. Fahrzeug nach einem der vorhergehenden Ansprüche, **dadurch gekennzeichnet, dass** an allen vier Ecken der Bodenplatte (12) winkelig ausgebildete Haltekanten (74) angeordnet sind.

10. Fahrzeug nach einem der vorhergehenden Ansprüche, **dadurch gekennzeichnet, dass** das Fahrzeug (10) Hängelaschen (80) und einen an den Hängelaschen (80) montierbaren Gurt (240) aufweist, der wahlweise als Umhängegurt zum Tragen des Fahrzeugs (10) im zusammengefalteten Zustand oder als Spanngurt zum Fixieren von Lasten auf der Bodenplatte (12) des Fahrzeugs (10) im entfalteten Zustand vorgesehen ist.

11. Fahrzeug nach einem der vorhergehenden Ansprüche, **dadurch gekennzeichnet, dass** an dem vorderen Plattenelement (24) ein oder mehrere Prallschütze (82, 84), bspw. an beiden Seiten einer mit der Lenkachse (46) verbundenen Lenkgabel (50), angeordnet sind.

12. Fahrzeug nach einem der vorhergehenden Ansprüche, **gekennzeichnet durch** einen am hinteren Plattenelement (30) angeordneten flexiblen Kennzeichenträger (120).

13. Fahrzeug nach einem der vorhergehenden Ansprüche, **gekennzeichnet durch** Kabelkanäle (202, 206), in denen elektrische Kabel (168, 169) geführt sind, wobei die Kabelkanäle (202, 206) mehrere Plattenelemente (24, 26, 28, 30) übergreifend ausgebildet sind.

14. Fahrzeug nach einem der vorhergehenden Ansprüche, **gekennzeichnet durch** eine mit der Lenkstange (14) nach vorne kippbarer Lenkgabel (50) und eine an der Lenkgabel (50) angeordneten Frontleuchte (78), die mit einer derart ausgebildeten Ausrichtmechanik (112) ausgestattet ist, dass die Frontleuchte (78) trotz unterschiedlicher Kippwinkel der Lenkgabel (50) in dieselbe Richtung ausgerichtet ist.

15. System aus einem Fahrzeug nach einem der vorhergehenden Ansprüche und einer im entfalteten Zustand des Fahrzeugs (10) auf der Bodenplatte (12) anordenbaren und ausfaltbaren Tasche (230) zur Aufnahme von Gegenständen, wobei die Tasche (230) im zusammengefalteten Zustand des Fahrzeugs (10) zur Aufnahme des Fahrzeugs (10) dient.

## Claims

1. Collapsible vehicle that can assume a collapsed state in which the vehicle (10) cannot be used and can be stored in a bag (230), and can assume an uncollapsed state in which the vehicle (10) can be used either as a scooter for transporting a person or as a handcart for transporting goods,
wherein the vehicle (10) comprising a floor plate (12), a steering bar (14), and four wheels (16, 18, 20, 22),
wherein, in the uncollapsed state, the floor plate (12) forms a continuous flat surface,
wherein the floor plate (12) is divided into at least three plate elements (24, 26, 28, 30) connected by at least two hinges (32, 34, 36) arranged transversely to the direction of travel, by means of which the floor plate (12) can be collapsed in the direction of the underside of the vehicle (10),
wherein all wheels (16, 18, 20, 22) are arranged on the outer plate elements (24, 30), namely two wheels (16, 18) on a front plate element (24) and two wheels (20, 22) on a rear plate element (30),
wherein the steering bar (14) is a telescopic rod which, when collapsed, can be stowed between the plate elements (24, 26, 28, 30) without dismantling the telescopic rod,
wherein the steering bar (14) can be tilted forward into different tilt positions and can be raised backward,
wherein the steering bar (14) is connected to a steering axle (46) via which the wheels (16, 18) on the front plate element (24) can be steered in any tilt position of the steering bar (14) by laterally pivoting the steering bar (14) about the steering axle (46),
wherein in a forward tilted tilting position of the steering bar (14), the vehicle (10) can be pulled by the steering bar (14).

2. Vehicle according to claim 1, **characterized in that**
the hinges (32, 34, 36) of the floor plate (12) have cantilever webs (216, 218) and are designed in such a way that the cantilever webs (216, 218) interlock and stabilize each other.

3. Vehicle according to claim 2, **characterized in that**
the cantilever webs (216, 218) are designed in such a way in terms of length, width, and with rounded edges (254, 256, 258, 260) that a human finger cannot become trapped between the cantilever webs (216, 218).

4. Vehicle according to one of the preceding claims, **characterized in that** the steering bar (14) is infinitely adjustable and/or can be pulled apart and pushed together with a defined force.

5. Vehicle according to one of the preceding claims, **characterized in that** a mounting (60) is provided at the upper end of the steering bar (14), to which additional modules, e.g., a control device (62) for controlling the speed of an electric motor (126) for driving the vehicle (10) and/or a trailer hitch, can be attached.

6. Vehicle according to one of the preceding claims, **characterized in that** a first mounting (124) is provided on the floor plate (12), e.g., its rear plate element (30), into which either a unit (154) with a wheel suspension and a non-driven wheel (20), or a unit (152) consisting of an electric motor (126) and a wheel (20) driven by the electric motor (126) can be interchangeably mounted, and/or
a second mounting (128) is provided on the underside of the floor plate (12), e.g. on the plate element (28) adjacent to the rear plate element (30), configured such that an accumulator (130) for supplying electrical power to the electric motor (126) can be removably mounted in the second mounting, and/or
on the underside of the floor plate (12), e.g., on the plate element (28) adjacent to the rear plate element (30), a third mounting (132) is provided in such a way that a control unit (134) for controlling the electric motor (126) can be removably mounted therein.

7. Vehicle according to one of the preceding claims, **characterized by** two independent foot-operated brakes (100), wherein, upon foot actuation, the brake (100) presses against a wheel (20, 22) associated with the brake (20, 22), wherein a spring (106) presses the brake (100) against the wheel in the absence of foot actuation, wherein the brake (100) can be fixed in a pressed position against the wheel (20, 22) via a shift lever (104) to provide a parking brake.

8. Vehicle according to claim 7, **characterized in that**
when the vehicle (10) is in its collapsed state, the spring (106) provides a locking mechanism that maintains the collapsed state.

9. Vehicle according to one of the preceding claims, **characterized in that** angular retaining edges (74) are arranged at all four corners of the floor plate (12).

10. Vehicle according to one of the preceding claims, **characterized in that** the vehicle (10) comprises suspension loops (80) and a strap (240) that can be mounted on the suspension loops (80), which strap is provided either as a shoulder strap for carrying the vehicle (10) in the collapsed state or as a tension strap for securing loads to the floor plate (12) of the vehicle (10) in the uncollapsed state.

11. Vehicle according to one of the preceding claims, **characterized in that** one or more impact protectors (82, 84) are arranged on the front plate element (24), for example on both sides of a steering fork (50) connected to the steering axle (46).

12. Vehicle according to one of the preceding claims, **characterized by** a flexible license plate holder (120) mounted on the rear plate element (30).

13. Vehicle according to one of the preceding claims, **characterized by** cable ducts (202, 206) in which electrical cables (168, 169) are routed, wherein the cable ducts (202, 206) are formed to span multiple plate elements (24, 26, 28, 30).

14. Vehicle according to one of the preceding claims, **characterized by** a steering fork (50) that can be tilted forward relative to the steering bar (14), and a front light (78) mounted on the steering fork (50), which is equipped with an alignment mechanism (112) designed such that the front light (78) is aligned in the same direction despite different tilt angles of the steering fork (50).

15. A system comprising a vehicle according to any of the preceding claims and a bag (230) that can be positioned on the floor plate (12) and unfolded when the vehicle (10) is in its uncollapsed state to hold objects, wherein the bag (230) serves to hold the vehicle (10) when the vehicle (10) is in its collapsed state.

## Revendications

1. Véhicule pliable, susceptible d'adopter un état plié, dans lequel le véhicule (10) n'est pas utilisable et peut se ranger dans une poche (230) et d'adopter un état non plié, dans lequel le véhicule (10) peut être utilisé sélectivement en tant que roller pour le transport d'une personne ou en tant que chariot pour le transport de marchandises, le véhicule (10) comportant une plaque de fond (12), une barre de direction (14) et quatre roues (16, 18, 20, 22), à l'état déplié, la plaque de fond (12) constituant une surface plane continue,
la plaque de fond (12) étant divisée en au moins trois éléments de plaque (24, 26, 28, 30) qui sont assemblés par au moins deux charnières (32, 34, 36) placées à la transversale de la direction de déplacement, au moyen desquelles la plaque de fond (12) est pliable en direction de la face inférieure du véhicule (10), toutes les roues (16, 18, 20, 22) étant placées sur les éléments de plaque (24, 30) extérieurs, à savoir deux roues (16, 18) sont placées sur un élément de plaque (24) avant et deux roues (20, 22) sont placées sur un élément de plaque (30) arrière, le barre de direction (14) étant une barre télescopique, qui à l'état plié peut se ranger sans démontage de la barre télescopique entre les éléments de plaque (24, 26, 28, 30), le barre de direction (14) pouvant être basculée vers l'avant dans différentes positions de basculement et pouvant être redressée vers l'arrière,
le barre de direction (14) étant assemblée avec un axe de direction (46), par l'intermédiaire duquel, par un pivotement latéral de la barre de direction (14) autour de l'axe de direction (46), les roues (16, 18) sur l'élément de plaque (24) avant peuvent être dirigées dans chaque position de basculement de la barre de direction (14), dans une position de basculement basculée vers l'avant de la barre de direction (14), le véhicule (10) se laissant tirer avec la barre de direction (14).

2. Véhicule selon la revendication 1, **caractérisé en ce que** les charnières (32, 34, 36) de la plaque de fond (12) comportent des barrettes en porte-à-faux (216, 218) et sont conçues de telle sorte que les barrettes en porte-à-faux (216, 218) s'imbriquent et se stabilisent réciproquement.

3. Véhicule selon la revendication 2, **caractérisé en ce que** les barrettes en porte-à-faux (216, 218) sont conçues au niveau de leur longueur, de leur largeur et avec des arrondis (254, 256, 258, 260) de telle sorte qu'un doigt humain ne puisse pas se coincer entre les barrettes en porte-à-faux (216, 218).

4. Véhicule selon l'une quelconque des revendications précédentes, **caractérisé en ce que** la barre de direction (14) est réglable en continu et / ou peut se déployer ou se rétracter avec une force définie.

5. Véhicule selon l'une quelconque des revendications précédentes, **caractérisé en ce que** sur l'extrémité supérieure de la barre de direction (14) est prévu un réceptacle (60), susceptible de recevoir des modules auxiliaires, par exemple un dispositif de commande (62) destiné à commander la vitesse d'un moteur électrique (126), pour entraîner le véhicule (10) et / ou un attelage de remorque.

6. Véhicule selon l'une quelconque des revendications précédentes, **caractérisé en ce que** sur la plaque de fond (12) ou sur l'élément de plaque (30) arrière de celle-ci est prévu un premier réceptacle (124) dans lequel est montée de manière interchangeable, sélectivement une unité (154), qui comporte une suspension de roue et une roue (20) non entraînée ou une unité (152), qui comporte un moteur électrique (126) et une roue (20) entraînée par le moteur électrique (126) et / ou
**en ce que** sur la face inférieure de la plaque de fond (12), par exemple sur l'élément de plaque (28) voisin de l'élément de plaque (30) arrière est prévu un deuxième réceptacle (128) conçu de telle sorte, qu'un accumulateur (130) destiné à l'alimentation électrique du moteur électrique (126) puisse être monté dans celui-ci de manière interchangeable et / ou
**en ce que** sur la face inférieure de la plaque de fond (12), par exemple sur l'élément de plaque (28) voisin de l'élément de plaque (30) arrière est prévu un troisième réceptacle (132) conçu de telle sorte qu'une unité de commande (134) destinée à commander le moteur électrique (126) puisse être montée dans celui-ci de manière interchangeable.

7. Véhicule selon l'une quelconque des revendications précédentes, **caractérisé par** deux freins (100) à actionnement au pied, indépendants l'un de l'autre, lors d'un actionnement au pied, le frein (100) appuyant sur une roue (20, 22) associée au frein, en l'absence d'un actionnement au pied, un ressort (106) poussant le frein (100) en ouverture, par l'intermédiaire d'un levier de commutation (104), le frein (100) pouvant être fixé en en pression sur la roue (20, 22), pour mettre à disposition un frein de stationnement.

8. Véhicule selon la revendication 7, **caractérisé en ce que**, lorsque le véhicule (10) est plié, le ressort (106) met à disposition un mécanisme de fermeture qui maintient l'état plié.

9. Véhicule selon l'une quelconque des revendications précédentes, **caractérisé en ce que** sur les quatre coins de la plaque de fond (12) sont placées des arêtes de maintien (74) conçues de forme coudée.

10. Véhicule selon l'une quelconque des revendications précédentes, **caractérisé en ce que** le véhicule (10) comporte des pattes de suspension (80) et une sangle (240) susceptible d'être montée sur le pattes de suspension (80), qui est prévue sélectivement en tant que bandoulière pour porter le véhicule (10) lorsqu'il est plié ou en tant que sangle de serrage, pour fixer des charges sur la plaque de fond (12) du véhicule (10) lorsqu'il est déplié.

11. Véhicule selon l'une quelconque des revendications précédentes, **caractérisé en ce que** sur l'élément de plaque (24) avant sont placées une ou plusieurs protections antichocs (82, 84), par exemple sur les deux côtés d'une fourche directrice (50) assemblée avec l'axe de direction (46).

12. Véhicule selon l'une quelconque des revendications précédentes, **caractérisé par** un support d'immatriculation (120), placé sur l'élément de plaque (30) arrière.

13. Véhicule selon l'une quelconque des revendications précédentes, **caractérisé par** des conduits de câbles (202, 206), dans lesquels sont tirés des câbles (168, 169) électriques, les conduits de câbles (202, 206) de plusieurs éléments de plaque (24, 26, 28, 30) étant conçus en se chevauchant.

14. Véhicule selon l'une quelconque des revendications précédentes, **caractérisé par** une fourche directrice (50), susceptible d'être basculée vers l'avant avec la barre de direction (14) et une lampe frontale (78), placée sur la fourche directrice (50) qui est équipée d'un mécanisme d'orientation (112) conçu de telle sorte, que malgré différents angles de basculement de la fourche directrice (50), la lampe frontale (78) reste orientée dans la même direction.

15. Système, constitué d'un véhicule selon l'une quelconque des revendications précédentes et d'une poche (230) susceptible d'être placée sur la plaque de fond (12) lorsque le véhicule (10) est déplié, pour recevoir des objets, lorsque le véhicule (10) est plié, la poche (230) servant à recevoir le véhicule (10).
